# EUROPEAN PATENT SPECIFICATION

(11) **EP 0 578 727 B1**
(45) Date of publication and mention of the grant of the patent: **11.09.1996**
(21) Application number: 92908985.2
(22) Date of filing: 13.03.1992
(51) Int. Cl.: B07C 5/342, B29B 17/02

(54) **METHOD AND APPARATUS OF SORTING PLASTIC ITEMS**
VERFAHREN UND GERÄT ZUM SORTIEREN VON KUNSTSTOFFGEGENSTÄNDEN
METHODE ET APPAREIL POUR TRIER LES ARTICLES EN MATIERE PLASTIQUE

(30) Priority: 14.03.1991 US 669043
(43) Date of publication of application: 19.01.1994
(73) Proprietor: WELLMAN, INC., Johnsonville, SC 29555-0188 (US)
(72) Inventor: BOOTH, Hubert, J., Florence, SC 29501 (US); STEAGALL, Paul, H., III, Florence, SC 29501 (US); WRIGHT, Michael, W., Florence, SC 29501 (US)
(74) Representative: Warren, Keith Stanley
(86) International application number: PCT/US92/02025
(87) International publication number: WO 92/16312

(56) References cited:
- EP-A- 0 303 034
- EP-A- 0 441 012
- DE-A- 3 612 076
- DE-B- 2 544 963
- DE-B- 2 546 143
- US-A- 4 344 539
- US-A- 4 919 534

## Description

This invention relates to the recycling of plastic materials, and more particularly relates to the sorting of a mixture of plastic bottles of different materials into fractions for reprocessing wherein each fraction contains bottles of the same material.

Within the last several years, public interest in the recycling of plastics has grown significantly. The primary reason for the increased public awareness is the non-biodegradable nature of many plastics; i.e., the chemical stability of plastics that makes their use in products attractive also prevents their decomposition in landfills after use. As such, the public is demanding that these plastic products be recycled into new products rather than being transported to and dumped in a landfill.

A primary difficulty in recycling plastics is that, for a collection of recovered plastic items to be recyclable and therefore valuable, the plastic items must be sorted into smaller collections wherein all items of the fraction are made of the same generic material; only then can they be reground into a form useful in making new products. Generally, the resident or business that discards plastic items probably lacks the expertise to sort the items by material type, nor can the waste collector be expected to be sufficiently knowledgeable to do so. As a result, this sorting is typically performed by hand by those with sufficient experience to recognize different plastics, but this process is extremely labor-intensive and for that reason undesirable, impractical, or even impossible for large amounts of waste plastic.

Plastic bottles are a prolific source of plastic waste, and thus are a primary target for recycling. Plastic bottles are used as containers for such products as carbonated beverages, the bottles for which generally are made of polyethylene terephthalate (PET), milk and household cleaning products, which are bottled predominantly in high density polyethylene (HDPE), and other household goods, which are bottled with polyvinyl chloride (PVC), polypropylene (PP), polycarbonate (PC) and polystyrene (PS). PET bottles often include a colored HDPE basecup, which also must be separated somehow. Bottles of all of these plastic materials generally are collected from the end users as a group, either by a household or by a waste collector, and delivered to a reprocessor in bales. The bales will often contain not only single bottles, but interlocked clusters of bottles that become intertwined as they are crushed during the baling process. To effectively separate all of the bottles in such a group so that the fractions resulting from separation are useful in recycling, and based on current uses of plastics, the mixture should preferably be separated into five fractions: clear PET, green PET, clear HDPE, colored HDPE, and other plastics. It is of particular interest to remove all PVC bottles from PET bottles, as these materials cannot be separated by density, and because a small percentage of PVC in a sample of ground PET will contaminate that sample. The prior art fails to disclose a method of accurately sorting a collection of bottles automatically, or an apparatus designed to perform the sortation.

EP-A-0 441 012 discloses a method of and apparatus for sorting plastic materials by detecting light that passes through a polarizing filter, a stationary plastic bottle, and a second polarizing filter. Detection is effected by means of a device which converts light into an electrical signal, i.e. a phototransistor, photodiode, phototube, or photomultiplier.

US-A-4 344 539 discloses the use of an air jet to selectively eject items from a stream.

It is an object of the present invention to provide a method and apparatus for separating a mixture of individual plastic items, such as plastic bottles, wherein each individual item of the mixture is predominantly made of a single plastic material, but different individual items are made of different plastic materials, into fractions, each of which contains a single material.

According to one aspect of the present invention there is provided a method of separating individual plastic items from a mixture of plastic items of the general type disclosed in EP-A-0441012, the method comprising:
measuring the effect that each individual item in a stream of items has on light of a predetermined character directed at the item from a source and measured at a detector opposed to the source as the items in the stream are successively directed past the source and the detector; and
selectively removing individual items from the stream based upon a comparison of the light produced by the source and any light received at the detector.

This aspect of the invention is characterised in that the light from the individual items is detected by a line scan camera detector, which comprises the detector, as the items in the stream move continuously past the light source and detector.

According to another aspect of the present invention, there is provided an apparatus for separating individual plastic items from a mixture of plastic items of the general type disclosed in EP-A-0441012, the apparatus comprising:
(a) a light source for emitting light of a predetermined character
(b) a detector opposed to said light source for measuring the effect each individual item has on light emitted by said light source as the individual items in the stream are successively directed between said light source and said detector; and
(c) sortation means responsive to said detector for selectively removing individual items from the stream based on a comparison of the light produced by said source and any light detected by said detector.

This aspect of the invention is characterised in that a line scan camera detector comprises the detector, the line scan camera detector being operable to detect the light from the individual items as the items in the stream move continuously past the light source and detector.

A preferred embodiment of the invention includes directing the light through a first polarising filter prior to directing it through an item and detecting the light through a second polarizing filter oriented perpendicularly to the first filter. In this embodiment, the detector detects no light unless the material of an item rotates the light sufficiently to allow detection. The light can also be directed through a colorizing filter prior to being directed through the item and measured through a second colorizing filter; the filter aids in distinguishing colored items from clear items.

In a more particularly preferred embodiment, the plastic items being separated are plastic bottles, and the effect measured is the amount of light rotated by the plastic material of the bottles that is transmitted to the detector. Each of the bottle fractions created by the selective removal of bottles from a stream of bottles can then be sorted in the same manner until the mixture has been fully sorted into fractions containing bottles all made of the same plastic material. In a typical embodiment, the mixture of plastic bottles comprises clear and green PET bottles, clear and colored HDPE bottles, PVC bottles, PC bottles, PS bottles, and PP bottles.

The apparatus may include a screening assembly or apparatus for separating single plastic bottles from a mixture of single plastic bottles, small interlocked bottle clusters, large interlocked bottle clusters, and undersized items in preparation for sortation as described above. This apparatus may comprise a first screening means for separating large interlocked clusters, a second screening means for separating undersized items, and means for directing an air jet against a bottle or small interlocked bottle cluster which is sufficiently forceful to displace a single bottle to a collection means, but insufficiently forceful to displace a small interlocked bottle cluster to the collection means. The apparatus may also comprise a debaler which disengages individual bottles formed into a bale, magnetic means for removing metal items, and vacuum means for removing loose paper items, plastic bags, and the like from the mixture.

The apparatus may also include decapping apparatus for removing the caps which remain attached to HDPE bottles. This decapping apparatus may comprise a chamber having an inner wall, a stationary blade attached to the housing inner wall, a movable striking blade, and means for moving the striking blade past the stationary blade in such a manner that the striking edge of the striking blade moves to a position in which the striking edge is substantially parallel to and in adjacent but noncontacting relation with the outer edge of the stationary blade. The means for moving the striking blade may rotate the striking blade.

Apparatus may also be provided for disengaging interlocked bottle clusters to produce single bottles. This apparatus may comprise a housing, a first movable support for mechanical fingers, a first plurality of mechanical fingers attached to the first movable support, a second movable support for mechanical fingers, a second plurality of mechanical fingers attached to the second movable support, and means for moving the first and second movable supports such that the striking ends of the sets of pins intermesh but do not contact each other. The movable supports may rotate the fingers in opposite angular directions.

Reference will now be made to the accompanying drawings, in which:-
Figures 1 and 1A provide a schematic overview of the steps involved in separating and sorting a mixture of plastic bottles.
Figure 2 is a side elevational view of the debaler.
Figure 3 is a cross-sectional view of the debaler housing taken along lines 3-3 of Figure 2.
Figure 4 is a downstream end view of the debaler housing and flow control plates taken along lines 4-4 of Figure 2.

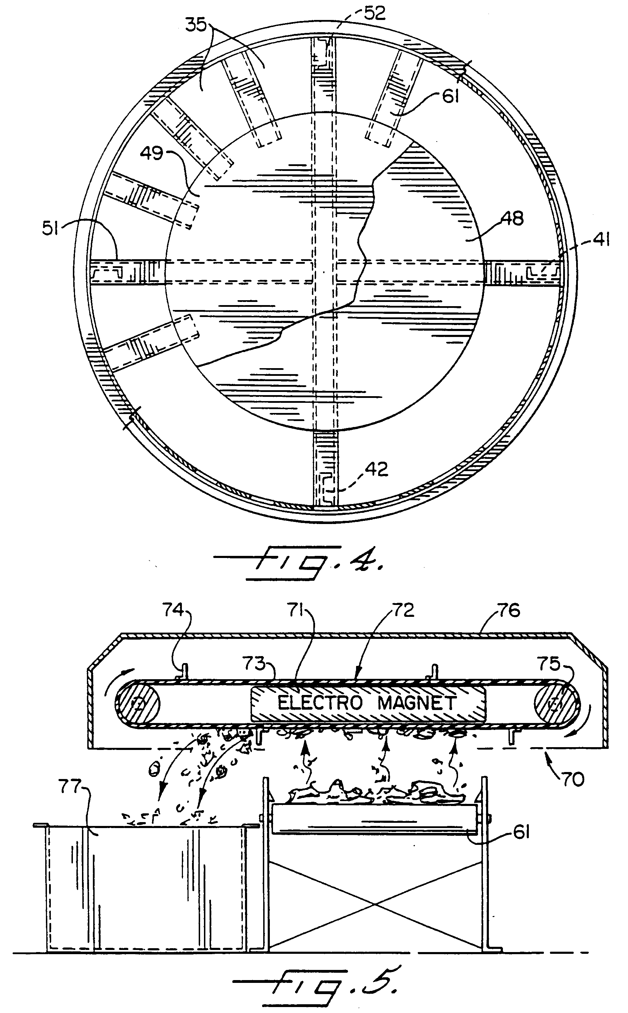

Figure 5 is a side view of the electromagnet and cleated conveyor belt which removes metallic items from the stream.
Figure 6 is a cross-sectional side view of the large cluster disengaging apparatus.
Figure 7 is a cross-sectional view of the large cluster disengaging apparatus taken along lines 7-7 of Figure 6.
Figure 8 is a top view of the first roller conveyor, the second roller conveyor, and the trajectory modifier of the single bottle screener, the small cluster disengagement apparatus, and belt conveyors leading to and from each apparatus.
Figure 9 is a side view of the first roller conveyor taken along lines 9-9 of Figure 8.
Figure 10 is a perspective view of three typical rollers found in the first roller conveyor and second roller conveyor.
Figure 11 is an end view of three typical rollers of a roller conveyor comprising friction rods taken along lines 11-11 of Figure 10.
Figure 12 is a cross-sectional side view of the second roller conveyor and the trajectory modifier taken along lines 12-12 of Figure 8.
Figure 13 is a cross sectional side view of the trajectory modifier.
Figure 14 is a cross-sectional view of the small cluster disengaging apparatus and the small cluster roller conveyer taken along lines 14-14 of Figure 8.
Figure 15 is a cross-sectional view of the small cluster disengaging apparatus taken along lines 15-15 of Figure 14.
Figure 16 is a front view of two representative subunits of the HDPE/PET separator unit.

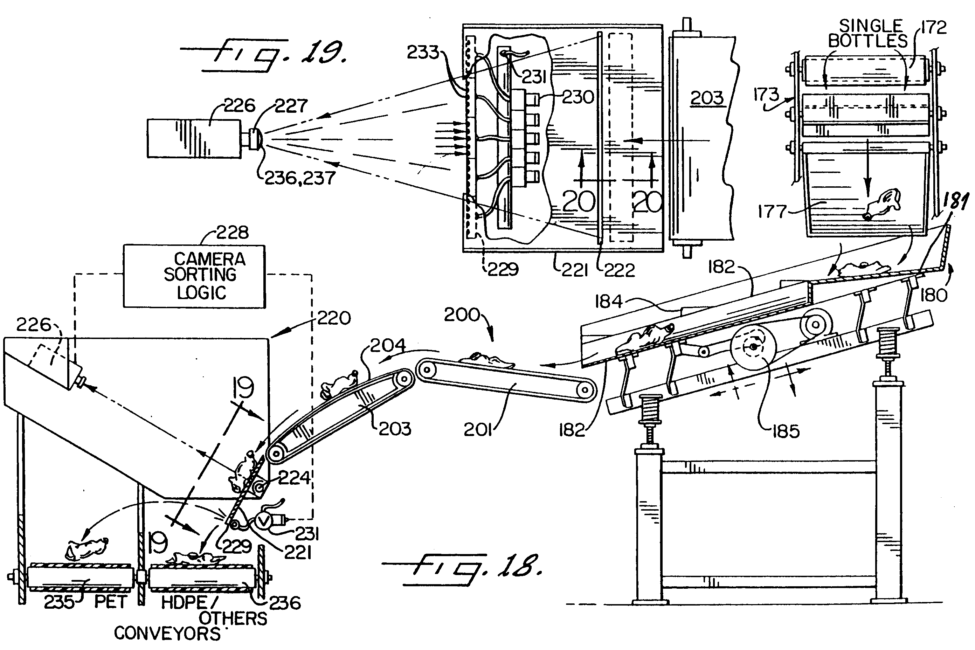

Figure 17 is a cross-sectional view of the lower section of a vibrating conveyor taken along lines 17-17 of Figure 16.
Figure 18 is a side view of a representative positioning unit comprising a vibrating conveyor, an upwardly inclined acceleration belt conveyor, and a radial conveyor, and a representative sorter.
Figure 19 is a view of a representative slide plate and a cutaway view of a representative series of air jets taken along lines 19-19 of Figure 18.
Figure 20 is a cross-sectional view of a VHO lamp with a polarizing filter and a red filter taken along lines 20-20 of Figure 19.

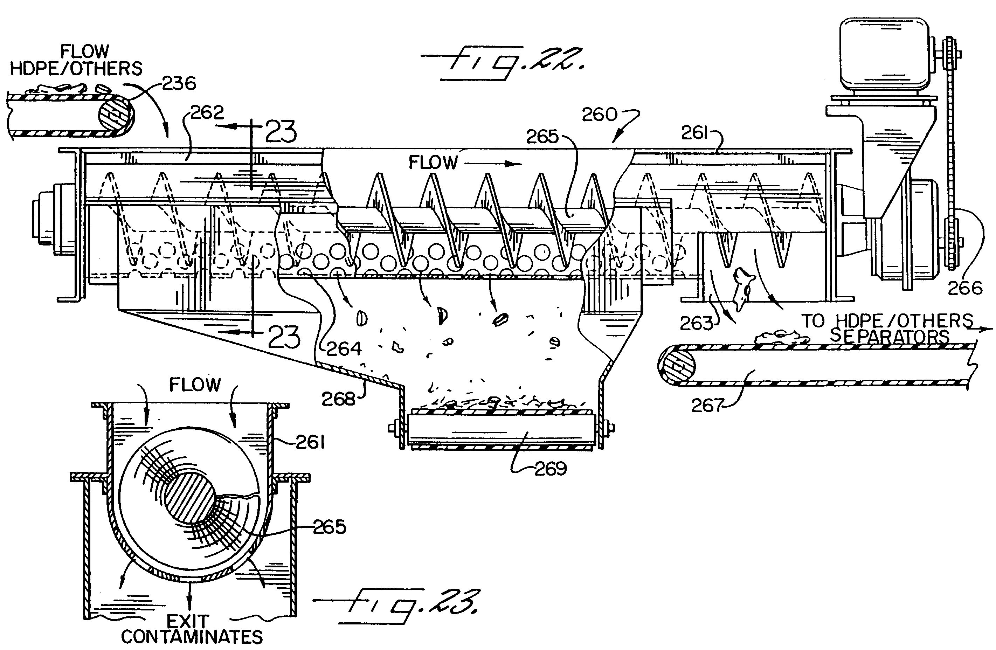

Figure 21 is a side view of a representative PET sorter.
Figure 22 is a cutaway side view of the HDPE/PVC screening auger conveyor.
Figure 23 is a cross-sectional view of the HDPE/PVC screening auger conveyor taken along lines 23-23 Figure 22.
Figure 24 is a cross-sectional front view of a decapper and decapper screening auger conveyor.

One embodiment of the present invention provides a method for sorting a mixture of plastic items wherein each individual plastic item is made predominantly of a single material, but different plastic items are made of different materials. The method comprises measuring the effect that each individual item has on light of a predetermined character directed at the item from a light source and measured at a detector opposed to the source as a stream of the items is successively directed past the source and the detector, and selectively removing individual items from the stream based upon a comparison of the light produced by the source and any light received at the detector. The method depends on the fact that each plastic material has an inherent characteristic effect on light that differs from other plastic materials. By measuring the effect an item has on light of a predetermined character and comparing that light to light emitted by the light source, the detector can distinguish different materials and thus signal the sortation means to either remove the item from the initial stream to a second stream or allow it to remain with the original stream.

In a presently preferred embodiment, the effect measured is that of the rotation of polarized light by an item. In general, plastic materials have inherent amorphous/crystalline ratios and crystalline structures unique to each material. The crystalline structure and percentage of material in crystalline form in a particular plastic affect the degree to which the plastic rotates light. This rotation can be easily detected by directing light from the source through a polarizer prior to directing it at the item to be examined and by detecting the light through a second polarizer oriented perpendicularly to the first polarizer. The relative orientation of the first and second polarizer prevents light from reaching the detector unless an item rotates the light, thereby indicating to the sortation means that a light-rotating item is present. The quantity of light detected at the detector depends on the transmissivity of the item, so that a greater quantity of light will be detected when an item made of a material having a high transmissivity is examined than when an item made of a material which transmits little or no rotation is detected. Thus by knowing the most likely group of plastic materials that make up a mixture of plastic items, a series of sortations can be designed wherein each sortation step removes items from its stream upon the detection of a certain quantity of light which distinguishes the materials desired to be sorted by that step. The initial stream can be fractionated again and again into smaller streams until all items have been sorted into fractions containing items of only a single material.

An apparatus for carrying out the method described above comprises a light source for emitting light of a predetermined character, a detector opposed to the light source for measuring the effect that each individual item has on the light as the stream of bottles is directed between the light source and the detector, and sortation means for selectively removing individual bottles from the stream based on a comparison of the light emitted by the source and any light detected by the detector. The light source can be any source capable of emitting light of predetermined character. In a preferred embodiment of the invention the light source further comprises a first polarizing filter mounted between the light source and the stream of items which rotates light prior to its being directed at an individual item. The detector can be any type of detection means that is suitable for determining the effect that an item has on light of a predetermined character. These are well-known by those of ordinary skill in this art and can be selected without undue experimentation. Preferably, the detector is suitable for determining whether an item has rotated light directed at it. A preferred embodiment further comprises a second polarizing filter oriented perpendicularly to the source's polarizing filter through which the second filter detector detects the light. As a result of this polarizer's relative orientation, no light emitted by the source reaches the detector unless the light has been rotated by an item as the item passes between the light source and the detector. If a certain quantity of light reaches the detector, the detector signals the sortation means to remove that item from the stream. The sortation means can be any means responsive to the detector suitable for removing an item from a stream, such as mechanical paddles, a hydraulic jet, or an air jet. In the present embodiment, an air jet is preferred.

The present invention will now be described more particularly hereinafter with reference to the accompanying drawings, in which a preferred embodiment of the invention is shown. The invention can, however, be embodied in many different forms and should not be construed as limited to the embodiment set forth herein; rather, applicants provide this embodiment so that this disclosure will be thorough and complete, and will fully convey the scope of the invention to those skilled in the art.

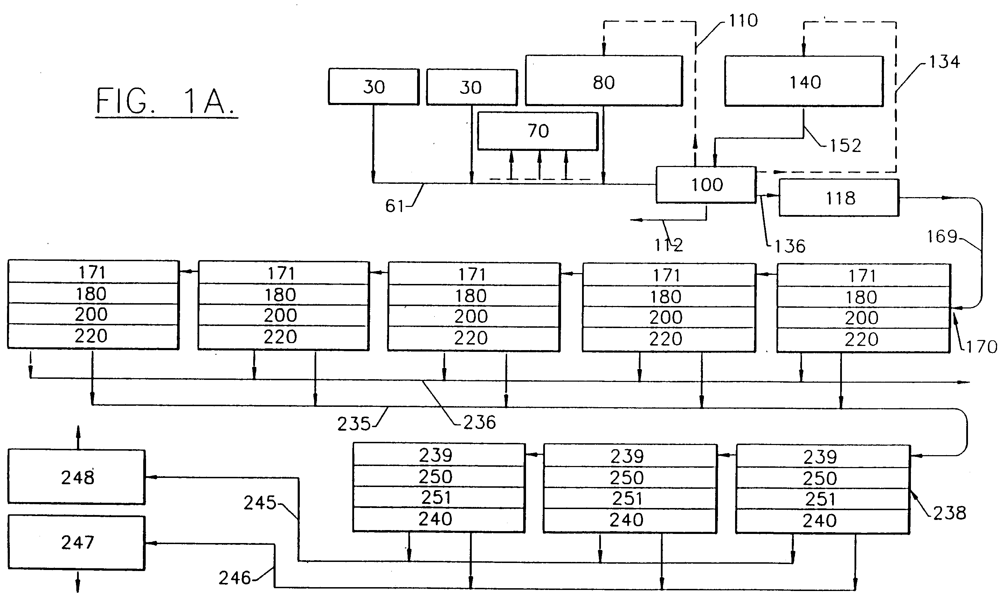

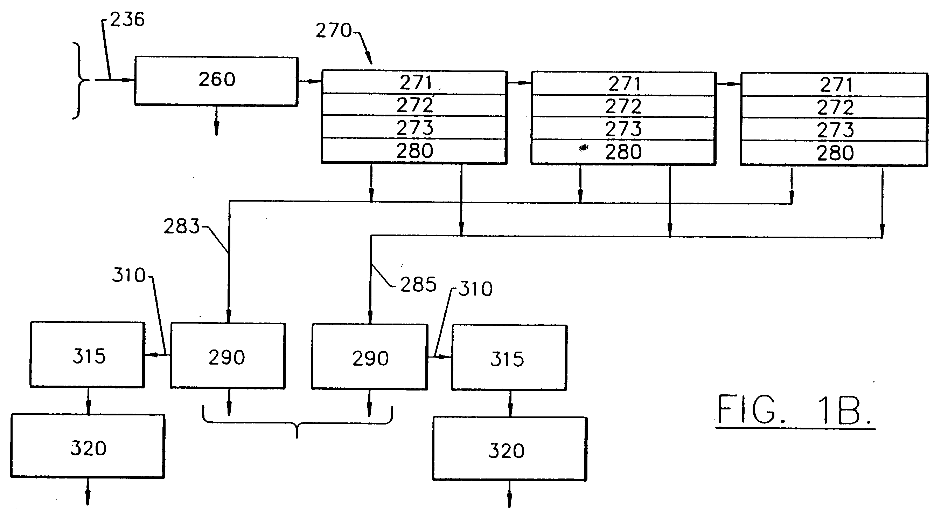

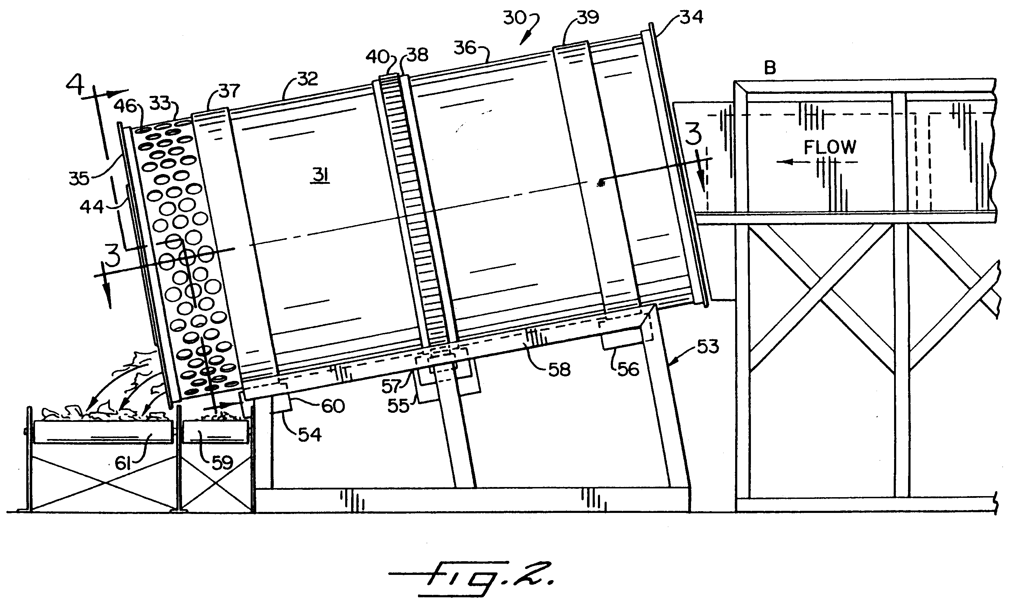

Figures 1 and 2 illustrate through a schematic flow chart an overview of the material flow in sorting plastic bottles, which is a presently preferred embodiment of the invention. The bottles arrive at the plant site in bales which typically predominantly comprise plastic bottles but which also include metal caps, paper, plastic labels, dirt, and the like which are unavoidably included during bottle collection. Usually the overwhelming majority of plastic bottles included in the bale are a mixture of green PET bottles, clear PET bottles, clear HDPE bottles, and colored HDPE bottles, with the remainder generally comprising PVC bottles, PC bottles, PS bottles and PP bottles. These remaining bottles will be referred to herein as "other bottles". Most are individual bottles, but during the baling process some bottles are crushed in such a way that they form interlocked bottle clusters. As would be expected, the presence of clusters is undesirable for sorting because they often will include therein bottles made of different materials. As used herein, the term "large interlocked bottle clusters" represents clusters that are significantly larger in size than an individual bottle, and the term "small interlocked bottle cluster" represents clusters that are similar in size to an individual bottle.

As shown in Figures 1 and 2, the bottles pass through a debaler **30** which tumbles the bale to separate its components and form them into a stream of individual items. These items are conveyed beneath an electromagnetic unit **70** which attracts and thus removes metal objects, which predominantly comprise steel caps and wire, from the stream. The items then travel on a belt conveyor **61** to a single bottle screening unit **100** comprising a first screener which removes large interlocked bottle clusters from the stream, a second screener which removes undersized items, and a trajectory modifier which separates the single bottles from small interlocked bottle clusters. The small interlocked clusters and large interlocked clusters are conveyed to means for disengaging the individual bottles and then are conveyed back into the stream of single bottles.

In the preferred embodiment, the stream of single PET, HDPE and other bottles is divided by a PET/HDPE separator **170** into five substantially equal fractions; although preferred for processing ease, the step is theoretically unnecessary to the practice of the invention. Each fraction enters an accompanying PET/HDPE positioning unit, wherein individual bottles are preferably oriented and distanced from each other. They then travel to an PET/HDPE sorter **220**, wherein the fraction is separated by the method described above into one fraction containing PET bottles and a second fraction containing HDPE and other bottles.

The PET fractions emerging from the PET/HDPE sorters are combined into a single PET stream on a conveyor **235** which conveys them to a PET separator **238**, which divides the stream into three substantially equal PET fractions. Each of these is conveyed successively to a PET positioning unit and a PET sorter **240**, wherein green PET bottles are separated from clear PET bottles using the sorting method described herein. The green PET fractions exiting the PET sorters are combined into a green PET stream; similarly, the clear PET fractions are combined into a clear PET stream. Each of these streams is conveyed to its respective granulator and wash systems for final processing.

Concurrently, the fractions containing HDPE and other bottles emerge from the sorters and are combined to form a single stream. This stream is conveyed through a screening auger conveyor **260** to remove unwanted small items which were not screened earlier or which were created in the first sorting step, such as bottle fragments. Next, the stream is divided into three substantially equal fractions in an HDPE separator **270**. Each HDPE fraction is then successively conveyed to an HDPE positioning unit and HDPE sorter **280**, wherein each fraction is sorted into a clear HDPE fraction and a fraction containing colored HDPE and other bottles. The clear HDPE fractions and colored HDPE fractions emerging from the HDPE sorters are combined with their identical fractions emerging from the other sorters, then are conveyed to decappers **290**. Many HDPE have plastic caps which remain attached to the bottles after disposal. The decappers remove these caps by striking the bottles with rotating blades with sufficient force to disengage the caps. The capless bottles are then conveyed to their respective shredders and granulation/wash systems.

The debaler, broadly illustrated at **30** in Figures 2-4, disengages the contents of a bale **B** to produce single bottles, interlocked bottle clusters, and other debris incident to the collection and baling of bottles. The debaler **30** comprises a cylindrical housing **31**, a debaler support frame broadly designated at **53**, and a drive motor **60**.

The support frame **53** comprises frame support members **58** and three rollers **54**, **55**, **56** for rotating housing **31**. The center roller **55** further comprises a groove **57** for restraining lateral movement of the housing **31**. The drive motor **60** is attached to the support frame **53** and is operatively connected to the downstreammost roller **54** to rotate the housing **31**.

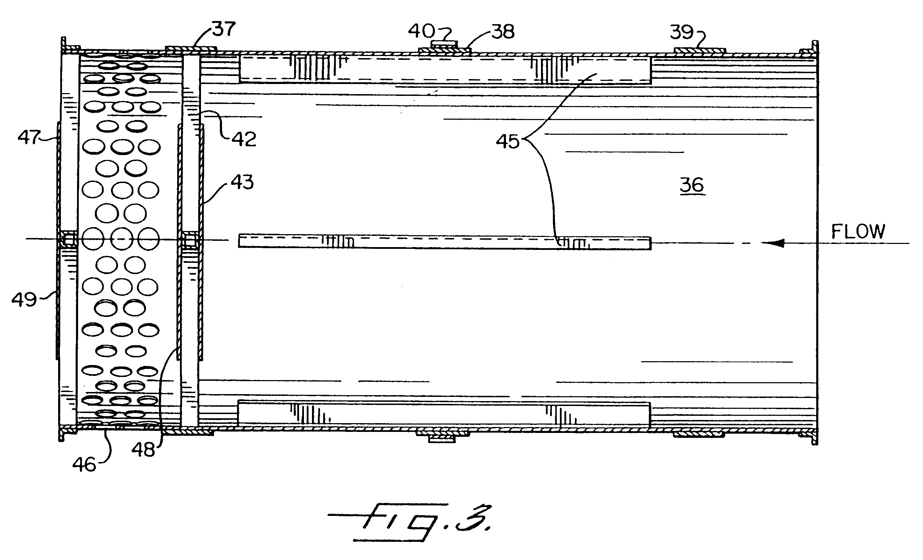

The housing **31** rests on the debaler support frame **53** inclinedly downward from upstream to downstream to facilitate travel of the bottles through the debaler **30**. The housing **31** comprises an upstream solid section **32**, a downstream perforated section **33**, an entrance opening **34**, and a plurality of exit openings **35**. The solid section **32** has a cylindrical solid wall **36** which extends longitudinally the length of the solid section **31**. Four tumbling bars **45** (Figure 3) attached to the inner surface of the solid section **32** and spaced circumferentially equally about the inner surface of the solid wall **36** extend radially inwardly and longitudinally along the inner wall parallel to the longitudinal axis of the housing **31**. Three circular rotation bands **37, 38, 39** are attached to the outer surface of the solid wall **36** to provide a contact surface for the rollers **54, 55, 56.** The center rotation band **38** further comprises a restraining strip **40** which fits within a groove **57** of the center roller **55** and thereby restricts lateral movement of the housing **31**. A circular flow control plate **43** (Figure 4) is attached to the downstreammost end of the solid section **32** by twelve flow control plate support spokes (hidden by spokes **61** in Figure 4) equally spaced circumferentially about the solid wall **36**. Also attached to the wall **36** adjacent and downstream of the flow control plate **43** are two perpendicularly intersecting support beams **41, 42** which extend diametrically across the housing **31**.

The perforated section **33** comprises a cylindrical perforated wall **46** having a plurality of openings **47** through which small unwanted items from the bale can pass. The openings **47** as shown are circular holes 7.62 cm (three inches) in diameter but can be of any appropriate shape and size small enough to prevent passage of a bottle. A flow control plate **48** substantially identical in size and shape to the flow control plate **43** described earlier is attached to the upstreammost end of the perforated section **33** by twelve equally circumferentially spaced flow control plate support spokes **50**. A second flow control plate **49** is attached to the downstreammost end of the perforated section **33** by twelve flow control plate support spokes **61**. As best illustrated in Figure 4, the spokes **61** create the plurality of exit openings **35**. Diametrically extending and perpendicularly intersecting support bars **51, 52** substantially identical to the support bars **41, 42** are attached at the downstreammost end of perforated section **33**.

A contaminant belt conveyor unit **59** is located beneath the perforated section **33** and serves to collect small items passing through the openings **47** and convey them to a waste receptacle. It is to be understood that this belt conveyor unit and other belt conveyors noted below are well-known by those skilled in this art. As illustrated, they comprise a semi-flexible looped belt, two rollers over which the looped belt fits, and a drive unit for rotating the rollers, which in turn drive the belt to convey whatever items rest upon the belt in a predetermined direction. The upstreammost end of the debaler-screener belt conveyor unit **61** is located beneath the downstreammost end of the housing **31** to collect items emerging from the exit openings **35** of the debaler **30** and convey them to a single bottle screener **100**.

An intermediate portion of the debaler-screener belt conveyor **61** travels beneath an electromagnetic unit broadly illustrated at **70**, which comprises an electromagnet **71** mounted within the periphery of a cleated belt conveyor **72**, a hood **76**, and a metal collection area **77**. The electromagnetic unit **70** is mounted such that the direction of travel of the cleated belt conveyor **72** is perpendicular to the direction of travel of the debaler-screener belt conveyor **61**. The electromagnet **71** can be any device which provides an electromagnetic attraction for ferrometallic materials. The cleated belt conveyor **72** comprises a looped belt **73**, a driving unit **75** for supporting and moving the belt **73**, and a plurality of cleats **74** which span the width of and extend perpendicularly to the belt **73**. The cleats **74** encourage metal objects attracted by the electromagnet **71** to be conveyed to a metal collection area **77** rather than sliding on the belt **73** back towards the electromagnet **71** due to its magnetic attraction. The metal collection area **77** is located adjacent the debaler-screener belt conveyor **61** beneath the downstream end of the cleated belt conveyor **72** to collect metal items removed from the stream of items by the electromagnet **71** and conveyed away by the cleated conveyor belt **72**.

The debaler-screener belt conveyor **61** leads to a single bottle screening assembly **100** (Figure 8) which separates single bottles from the large interlocked bottle clusters, small interlocked bottle clusters, and unwanted undersized items also present in the stream. The single bottle screening assembly **100** comprises a first screening unit for removing large interlocked bottle clusters from the stream of items, a second screening unit for removing unwanted undersized items from the stream, and a trajectory modifier for separating single bottles from small interlocked bottle clusters. The first screening unit can be any means suitable for separating large interlocked bottle clusters within the stream from single bottles, small interlocked bottle clusters, and undersized items. A preferred first screening unit comprises a roller conveyor. As used herein, a roller conveyor comprises a frame having two parallel frame members, a plurality of parallel cylindrical rotatable rollers attached at either end perpendicularly to the frame members and spaced from each other such that a plurality of openings are created, and drive means for rotating the rollers about their longitudinal axes to convey items in a direction substantially perpendicular to the rollers. Such a roller conveyor is known to those skilled in this art. The second screening unit can be any means suitable for separating undersized items within the stream from single bottles and small interlocked bottles clusters; as with the first screening unit, a roller conveyor as described herein is preferred. The trajectory modifier can be any means which displaces single bottles to a collection means but does not displace small interlocked bottle clusters to the collection means. The preferred trajectory modifier is an air jet.

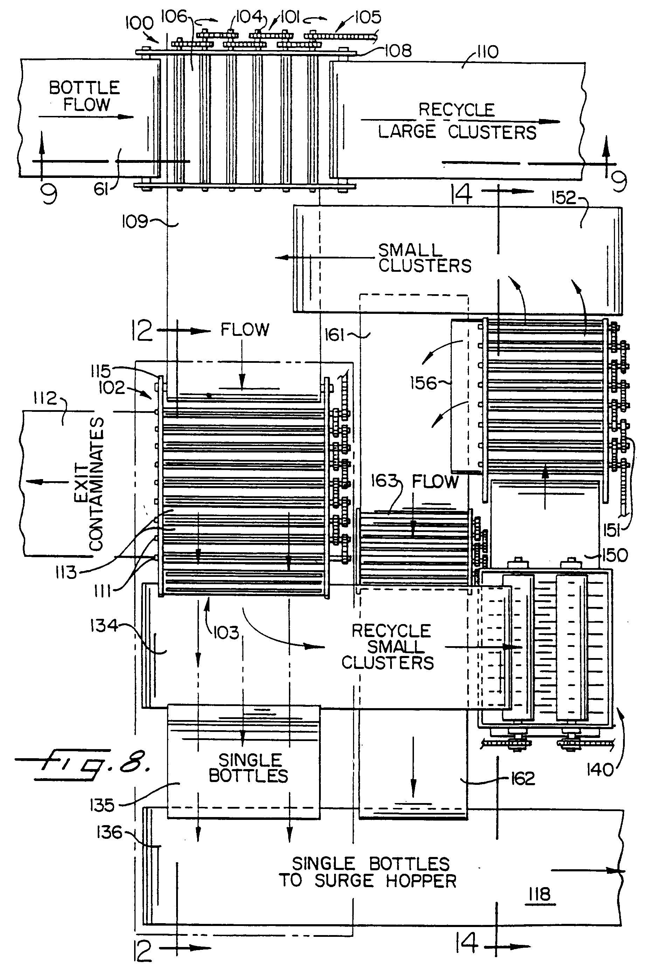

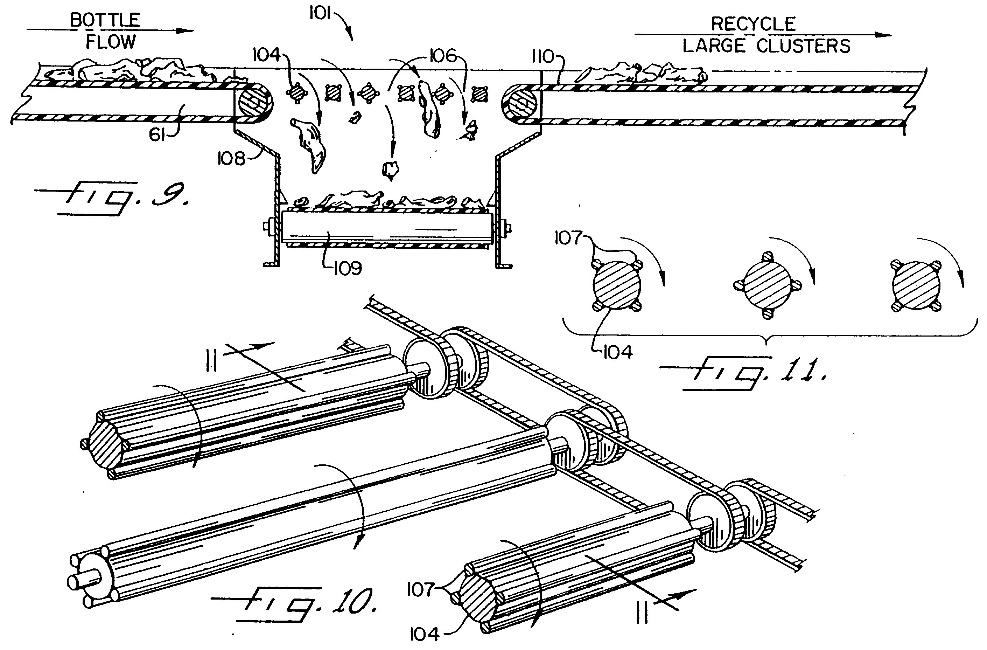

Figures 8 and 9 show the single bottle screening assembly **100** of the presently preferred embodiment, in which the first screening unit comprises a large cluster roller conveyor **101**, an undersized item roller conveyor **102**, and a trajectory modifier **103**. The large cluster roller conveyor **101** is located at the upstreammost end of the single bottle screening unit so that its upstreammost end abuts the downstreammost end of the debaler-screener belt conveyor **61**. The large cluster roller conveyor **101** is oriented so that its direction of travel is parallel to that of debaler-screener belt conveyor **61**. The large cluster roller conveyor **101** comprises a frame **108**, rollers **104** spaced from one another to form a plurality of openings **106**, and a drive unit **105**. The openings **106** are of a size sufficient for passage of single bottles, small interlocked bottle clusters and unwanted undersized items, but too small for passage of large interlocked bottle clusters. As illustrated, the rollers **104** are 5.08 cm (2 inches) in diameter and the longitudinal centers of the rollers are spaced 7 inches apart. As seen in Figures 10 and 11, each roller **104** further comprises four friction rods **107** equally spaced circumferentially about roller **104** to promote conveyance of bottles. As illustrated, the drive unit **105** comprises a series of belts attached to a motor, but can comprise any drive means suitable for rotating the rollers **104**. The downstreammost end of the large cluster screening unit **101** is adjacent to a large cluster belt conveyor **110** which leads to a large cluster disengagement apparatus **80**.

During operation, the stream of items is conveyed from upstream to downstream by the rolling action of the rollers **104**. Single bottles, small interlocked bottle clusters, and undersized items pass through the openings **106** onto the belt conveyor **109** located below the rollers **104**. Large interlocked bottle clusters do not pass through the openings **106** and continue onto the large cluster belt conveyor **110**.

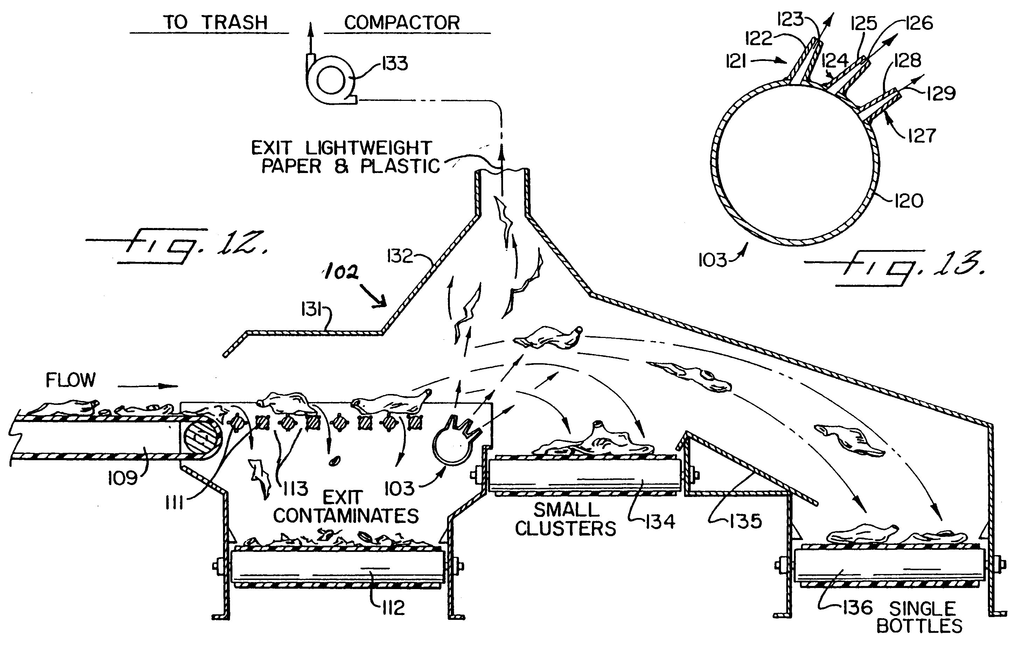

The belt conveyor **109** is located directly beneath and oriented perpendicularly to the large cluster roller conveyor **101** and leads to the undersized item screening unit **102** for further screening of items passing through the openings **106** in the large cluster roller conveyor **101**. In this presently preferred embodiment the undersized item screening unit **102** comprises a roller conveyor of the type described hereinabove, which includes rollers **111** that are 7.62 cm (3 inches) in diameter and are attached to a frame **115** so that the longitudinal centers of the rollers are spaced 12.7 cm (5 inches) apart. As shown in Figure 12, this roller spacing creates a plurality of openings **113** of a size sufficient for unwanted undersized items, such as dirt, paper, and the like, to pass therethrough, but too small for single bottles and small interlocked bottle clusters. As with the large cluster roller conveyer **101**, the rollers **111** further include four equally circumferentially spaced friction bars, each of which extends the length of the roller **111** parallel to the longitudinal axis of the roller. A contaminant belt conveyor **112** rests beneath the openings **113** to collect and convey away undersized contaminants passing through the openings **113**.

A trajectory modifier **103**, most clearly illustrated in Figure 13, is mounted adjacent, parallel to, and downstream from the downstreammost roller **111** of the undersized item roller conveyor **102**. The trajectory modifier **103** comprises a cylindrical plenum **120**, three spouts **121, 124, 127** attached to plenum **120**, a pressure unit (not shown) for providing a continuous air jet through spouts **121, 124, 127**, a hood **131** which covers undersized roller conveyor **102** and plenum **120**, and a vacuum unit **133**. The plenum **120** comprises a cylindrical tube which extends the width of the undersized item roller conveyor **102** and which is mounted parallel to rollers **111**. The upstreammost spout **121** comprises a rectangular nozzle **122** which narrows from its attachment at the plenum **120** to the slotted outlet **123**. The rectangular nozzle **122** is attached to the plenum **120** at its uppermost point and is angled upwardly downstream at approximately 22° to vertical. The center spout **124** comprises a rectangular nozzle **125** which narrows from its attachment at the plenum **120** to the slotted outlet **126**. The rectangular nozzle **125** is attached to the plenum **120** adjacent and downstream of the upstreammost spout **121** and is angled upwardly downstream at approximately 51° to vertical. The downstreammost spout **127** comprises a rectangular nozzle **128** which narrows from its attachment at the plenum **120** to the slotted outlet **129**. The rectangular nozzle **128** is attached to the plenum **120** adjacent and downstream of the center spout **124** and is angled upwardly downstream at approximately 55° to vertical. The pressure unit **130** of a type known to those skilled in this art for providing pressurized air flow is attached to the plenum **120** and provides continuous air flow through the slotted outlets **123, 126, 129**. The hood **131** includes an indented funnel **132** which rests above and slightly downstream of the upstreammost spout **121**. The funnel **132** has its wide end open and nearest the plenum **120** and its narrow end attached to the vacuum unit **133** for drawing air up through the funnel **132**. Perpendicularly oriented to, downstream of, and adjacently beneath the trajectory modifier **103** is the upstream end of a small cluster belt conveyor **134**, which leads to a small cluster disengagement apparatus **140**. A slide plate **135** comprises a flat plate inclined downwardly downstream located downstream and adjacently above the small cluster belt conveyor **134**. The upstreammost end of the single bottle belt conveyor **136** lies adjacent and perpendicular to the downstreammost edge of the slide plate **135**.

In operation, single bottles, small interlocked bottle clusters, and paper items emerge from the undersized item roller conveyor. The lifting force provided by the air jet from the upstreammost spout **121** in combination with the lift provided by the vacuum unit **133** is sufficient to displace a paper item but insufficient to displace a single bottle or small interlocked bottle cluster; thus paper and other lightweight items are lifted-from the stream, through the funnel **132**, and into a trash compactor **137**. As single bottles and small interlocked bottle clusters proceed, air jets expelled through the spouts **124, 127** combine to provide a lifting force sufficient to displace a single bottle over the small cluster belt conveyor **134** and to the slide plate **135** or the single bottle belt conveyor **136**, but insufficient to displace a denser small interlocked bottle cluster to the slide plate **135**. Preferably, this air jet displaces a single bottle between about 30.48 and 91.44 cm (1 and 3 feet).

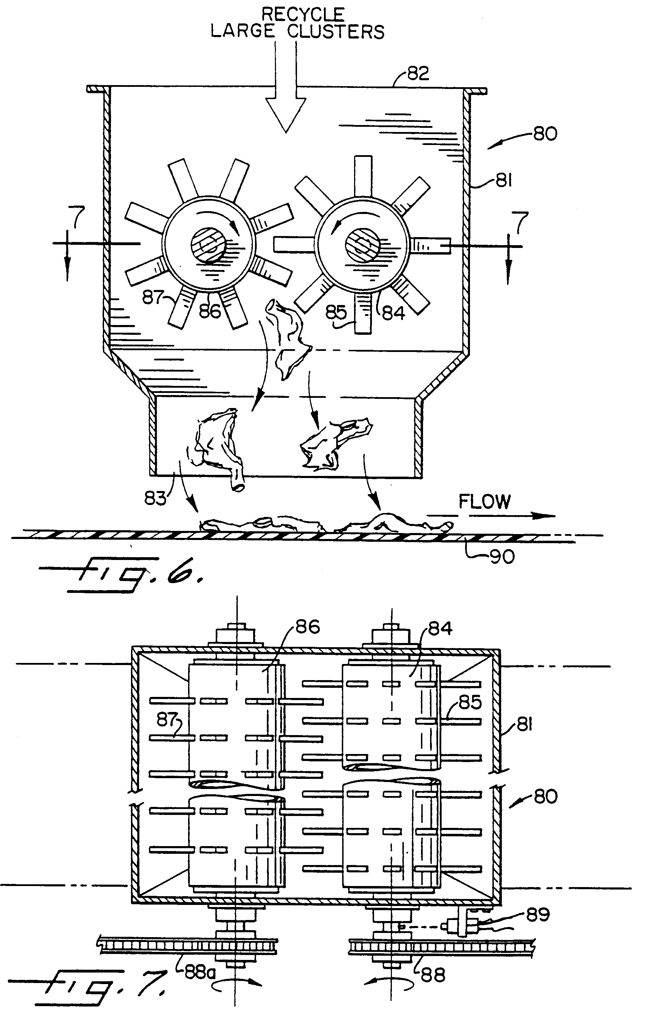

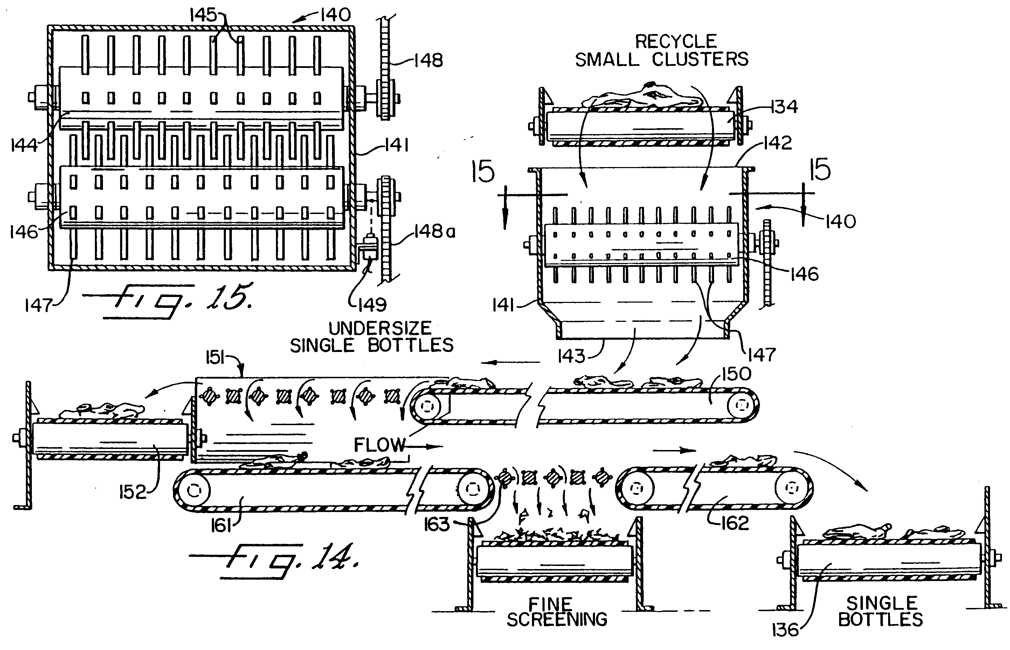

As described above, the upstream end of the large interlocked bottle cluster belt conveyor **110** is located adjacent the downstream end of the large cluster roller conveyor **101**. The large cluster belt conveyor **110** leads to a large cluster disengaging apparatus illustrated broadly at **80** in Figures 6 and 7. Similarly, the small cluster belt conveyor **134** leads from the downstreammost end of the trajectory modifier **103** to a small cluster disengaging apparatus illustrated broadly at **140** in Figures 14 and 15. Each of these cluster disengagement apparatus disengages the singles bottles within a cluster by striking the cluster with a plurality of mechanical fingers to provide sufficient torsion to overcome the interlocking forces holding the bottles together. Once disengaged, the single bottles can be conveyed back into the stream for sortation. Each cluster disengaging apparatus comprises a housing, a first movable support for mechanical fingers attached within the housing, a first plurality of fingers attached to the first movable support, a second movable support for mechanical fingers attached within the housing, a second plurality of fingers attached to the second movable support, and means for moving the support. The first movable support and the second movable support are positioned relative to each other so that as the first movable support moves the first plurality of fingers, and as the second movable support moves the second plurality of fingers, the fingers intermesh but do not contact one another.

In the preferred embodiment of the large cluster disengaging apparatus 80, a housing 81 is open on its top side to form an entrance opening 82 and on its lower side to form an exit opening 83. The movable supports comprise two drum-shaped members 84, 86 about 30.48 cm (twelve inches) in diameter rotatably attached with longitudinal centers about 48.26 cm (nineteen inches) apart to the side walls of the housing 81. A plurality of mechanical fingers 85, 87, each about 10.16 cm (four inches) long, 3.81 cm (one and one-half inches) wide and 1.91 cm (three-fourths inches) thick are attached to the circumference of each drum 84, 86. The fingers 85, 87 extend radially outward from the drum surface and are regularly spaced on the drums 84, 86 both longitudinally and circumferentially, thus forming circumferential rows and longitudinal "rings" of fingers. In the illustrated embodiment, each drum includes eight circumferential rows of fingers and nine equally spaced longitudinal "rings" of fingers for a total of 72 fingers per drum. The rings are oriented on the drums **84, 86** so that the fingers **85** attached to the drum **84** intermesh with but do not contact the fingers **87** attached to the drum **85**.

The means for moving the supports comprises two drive units **88, 88a** which rotate the drums **84, 86** about their respective longitudinal axes in opposed angular directions; i.e., the drum **84** rotates clockwise while the drum **86** rotates counterclockwise. The drive units **88**, **88a** further comprise means known in this art for reversing the angular direction in which each motor drives its support responsive to means **89** for sensing when movement has halted. The drums **84, 86** will continue to reverse direction until movement is halted a predetermined number of times within a predetermined time period; when this occurs operation of the apparatus is stopped to dislodge the engaged cluster.

In operation, large clusters pass through the entrance opening **82** into the housing **81**. The drums **84**, **86** rotate in opposite angular directions; it is preferred that the drum **84** be rotated at an angular velocity about three times higher than that of the drum **86**. The action of fingers striking the clusters disengages the individual bottles. If a single bottle or cluster is entangled in the fingers **85, 87** and prevents movement of the drums **84, 86**, the drive units **88, 88a** will receive a signal from the detector **89** that motion has halted and will reverse the angular direction of the drums **84, 86** in hopes of disentangling the cluster. Single bottles and clusters not disengaged by the apparatus pass out the exit opening **83** and onto a belt conveyor **90**, which in turn leads to the debaler-screener conveyor **61**. By this route single bottles emerging from the large cluster disengagement apparatus **80** are re-united with the stream of single bottles conveyed toward single bottle screener **100** for screening and sortation.

A small cluster disengagement apparatus, shown broadly in Figures 14 and 15 at 140, is located at the downstream end of the small interlocked bottle cluster conveyor 134. The basic elements and operation of the small cluster disengagement apparatus are virtually identical to those of the large cluster disengagement apparatus described hereinabove. The housing 141 is open on its top side to form an entrance opening 142 and is open on its lower side to form an exit opening 143. The movable supports comprise drum-shaped members 144, 146 30.48 cm (twelve inches) in diameter rotatably attached with longitudinal centers 48.26 cm (nineteen inches) apart to the side walls of housing 141. A plurality of mechanical fingers 145, 147 13.97 cm (five and one-half inches) long, 3.81 cm (one and one-half inches) wide and 1.91 cm (three-fourths inches) thick are attached to the circumference of the each drum 144, 146. The fingers 145, 147 extend radially outward from the drum surface and are regularly spaced on the drums 144, 146 both longitudinally and circumferentially, thus forming circumferential rows and longitudinal "rings" of fingers. Each drum includes six circumferential rows of fingers and eleven equally spaced longitudinal "rings" of fingers for a total of 66 fingers per drum. The rings are oriented on the drums 144, 146 so that the fingers 145 attached to the drum 144 intermesh with but do not contact the fingers 147 attached to the drum 145. The means for moving the supports comprises drive units 148, 148a which rotate the drums 144, 146 about their respective longitudinal axes in opposed angular directions; i.e., the drum 144 rotates clockwise while the drum 146 rotates counterclockwise. The drive units 148, 148a further comprise means known in this art for reversing the angular directionin which each motor drives its support responsive to means 149 for sensing when movement has halted. The drums 144, 146 will continue to reverse direction until movement is halted a predetermined number of times within a predetermined time period; when this occurs operation of the apparatus is stopped to dislodge the engaged cluster.

In operation, small clusters pass through the entrance opening **142** into the housing **141**. The drums **144, 146** rotate in opposite angular directions; it is preferred that the drum **145** be rotated at an angular velocity about three times higher than that of the drum **147**. The action of fingers striking the clusters disengages the individual bottles. If a cluster is entangled in the fingers **145, 147** and prevents movement of the drums **144, 146**, the drive units **148**, **148a** will receive a signal from the detector **149** that motion has halted and will reverse the angular direction of the drums **144, 146** in hopes of disentangling the cluster. Single bottles and clusters not disengaged by the apparatus pass out the exit opening **143** and onto a belt conveyor **150**.

Bottles exiting the small cluster disengaging apparatus **140** are conveyed on the belt conveyor **150** to roller conveyor **151** of the type described earlier herein. The roller conveyor **151** is present to recapture single bottles that are so densely crushed by the small cluster disengagement apparatus **140** that they would fail to be displaced by the trajectory modifier **103** to the single bottle belt conveyor **136**; the roller conveyor **151** includes 7.62 cm (three inch) diameter rollers mounted with longitudinal centers 12.7 cm (five inches) apart, thus creating openings of a size sufficient for a single highly crushed bottle to pass therethrough, but too small for small clusters to pass therethrough. A slide plate **156** for directing highly crushed single bottles to the upstream end of a belt conveyor **161** is located beneath the roller conveyor **151**; the belt conveyor **161** leads to another roller conveyor **163** for screening out bottle fragments producing by the striking action of the small cluster disengagement apparatus **140**. The roller conveyor **163** leads to a belt conveyor **162**, which in turn leads to the single bottle conveyor **136**. Through this route dense single bottles are conveyed to be re-united with the stream of single bottles.

The downstream end of the roller conveyor **151** is located adjacent the upstreammost end of the belt conveyor **152**, which leads to an intermediate section of the undersized item belt conveyor **109**. Small clusters and single bottles unable to pass through the openings in the roller conveyor **151** are re-united with the stream containing single bottles, small clusters, and undersized material prior to screening by the undersized item screening unit **102**. Single bottles will be displaced by the trajectory modifier **103** to the single bottle belt conveyor **136** for sortation. Small clusters will cycle through the small cluster disengagement apparatus **140** again for another attempt at disengagement.

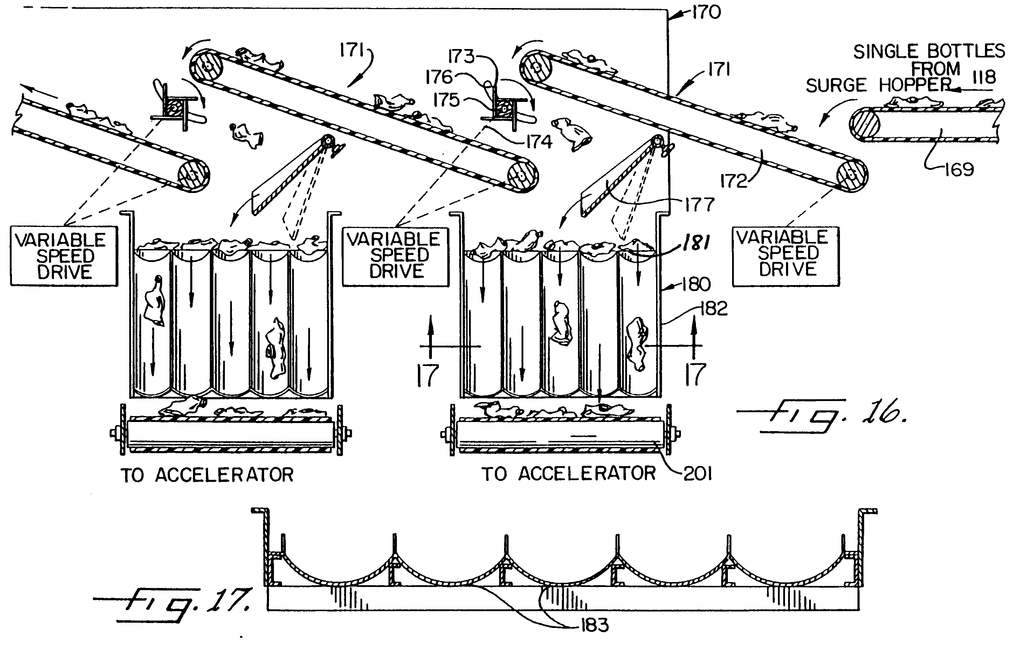

Returning now to the main stream of single bottles, best illustrated in Figure 16, the single bottle belt conveyor **136** leads to a surge hopper comprising a large hollow chamber which stores the single bottles until they are removed for sortation. Preferably, the surge hopper includes means known in the art for controlling the outgoing flow of bottles.

A PET/HDPE belt conveyor **169** extends from the exit of the surge hopper to a PET/HDPE separator unit **170**. The separator unit comprises five identical separator subunits **171**, two of which are shown in Figure 16, and each of which comprises an inclined belt conveyor **172**, a doffer **173**, and a catcher plate **177**. The downstream end of the PET/HDPE belt conveyor **169** is located over the upstream end of the inclined belt conveyor **172** of the first separator subunit **171**. The doffer **173**, which comprises four flat blades **174** attached to a rotating hub **175**, is adjustably mounted in an arcuate slot **176** just beneath the downstream end of the inclined belt conveyor **172**. The catcher plate **177** is located upstream of and beneath the downstreammost end of the inclined belt conveyor **172** and is inclined downwardly. During operation, a stream of bottles is conveyed up the inclined belt conveyor **171** until each bottle drops over its downstreammost end. As the doffer blades **174** rotate, they contact only a fraction of the bottles of the stream. The remainder land on the upstreammost end of the inclined belt conveyor of the next separation subunit. Contact by a doffer blade **174** with a bottle propels the bottle against the catcher plate **177**. Bottles propelled to the catcher plate **177** slide down its inclined surface and drop onto a vibrating conveyor **180**. The speeds of the inclined belt conveyor **172** and the doffer **173** and the mounting height of the doffer **173** are variable to permit adjustment to a particular stream of bottles; it is preferred that the speeds be adjusted such that the stream of bottles is divided substantially equally between the five separation subunits **171** in the series.

Each separator subunit **171** leads to its own positioning unit. Positioning units comprise means for orienting a bottle into a preferred alignment for detection and means for accelerating each bottle to separate it from others in the stream for more accurate detection. The purpose of positioning units is to improve the reliability of the sortation process. Orienting the bottles so that each bottle is presented to the detector in the same manner reduces the variability of light detection for successive bottles. The preferred orientation is one in which the longitudinal axis of the bottles is substantially parallel to its direction of travel through the detector. This orientation maximizes the exposure of the bottle to the detector, thus increasing the likelihood that the detector will recognize that light has been rotated. Accelerating the bottles prior to detection minimizes the risk that two bottles will be detected simultaneously by the same detector by increasing the distance between them.

In this preferred embodiment, the orientation means comprises a vibrating conveyor shown broadly at **180** in Figure 16. The vibrating conveyor **180** comprises a top section **181**, a lower section **182**, and an agitating assembly **185**. The top section **181**, located directly below the catcher plate **177**, comprises a flat surface inclined downwardly at a shallow angle of preferably about 5 degrees. Its downstreammost edge meets the upstreammost edge of the lower section **182**, which comprises five substantially semi-cylindrical chutes **183** aligned side-by-side and inclined more sharply downwardly, preferably about 30 degrees. The width of the semi-cylindrical chutes **183** is chosen to encourage a bottle to orient itself so that its longitudinal axis is substantially parallel with the longitudinal axis of the chute; a width of between 15.24 and 25.4 cm (6 and 10 inches) is preferred. Attached between each pair of adjacent chutes **183** are three vertical triangular dividing walls **184** which prevent bottles from descending the lower section **182** while not fully within a single chute **183**. The agitation assembly **185** can be any means known by those in the art to induce a rapid short-stroke repetitive motion in an object. The preferred motion in the present embodiment is one in which the vibrating conveyor **180** follows an elliptical path. This motion further encourages a bottle to align within a chute **183**.

An acceleration unit **200**, broadly illustrated in Figure 18, accelerates each bottle to distance it from the other bottles in the stream, which separation leads to more accurate detection and sortation. The acceleration unit **200** comprises an upwardly inclined acceleration belt conveyor **201** and a radial belt conveyor **203**, but can comprise any means which would increase the distance between bottles in the stream. The upstreammost end of the upwardly inclined acceleration belt conveyor **201** is located adjacent to and beneath the downstreammost end of the vibrating conveyor **180**. Preferably a bottle exiting the vibrating conveyor 180 travels at between 18.29 and 36.58 m (60 and 120 feet) per minute; preferably the upwardly inclined acceleration belt conveyor 201 conveys a bottle at between 30.48 and 60.96 m (100 and 200 feet) per minute. Meeting the downstream end of the upwardly inclined acceleration belt conveyor 201 is the upstream end of the radial conveyor 203. The radial conveyor 203 includes an arcuate conveying surface 204, the profile of which is defined by an arc such that a plane tangent to its upstream end is inclined downwardly at about 10 degrees to horizontal and a plane tangent to its downstream end is inclined downwardly at about 60 degrees to horizontal. The arcuate shape of the conveyor 204 surface permits a bottle to accelerate as it travels from upstream end of downstream end. In this preferred embodiment, the conveyor configuration causes a bottle to travel at between about 45.72 and 76.20 m (150 and 250 feet) per minute at the upstream end of radial conveyor 203 and at 76.20 and 106.68 m (250 and 350 feet) per minute at its downstream end. Each of the five positioning units 200 conveys its fractional stream to one of five HDPE/PET sorters 220. The sorter 220 is located beneath the downstream end of the radial conveyor 203. The sorter 220 comprises a slide plate 221 for controlling the distance between a bottle and camera 226 during detection, a very high output (VHO) fluorescent lamp 224 employed as the light source, a line-scan camera 226 which serves as a detector, and a plurality of air jets 229, each responsive to the camera 226, for selectively removing a bottle from the stream when the camera 226 detects a certain threshold quantity of light.

The slide plate 221, shown in Figures 18-20, comprises a flat surface mounted inclinedly downward with its upper edge adjacent the lower end of radial conveyor 203. The slide plate 221 includes a narrow upper light transmission slot 222 which extends horizontally across most of the expanse of the slide plate and permits the transmission of light from the lamp 224 to the stream of bottles and the camera **226**. The angle of the slide plate **221** is preferably substantially the same as that of the downstream end of the radial conveyor **203** so that bottles exiting the radial conveyor are transferred smoothly to slide plate **221**. The slide plate **221** provides a sliding surface for bottle travel during sensing, thus controlling the distance between the bottle and the camera **226** and producing a more accurate detection than that of a free-falling bottle.

The VHO lamp **224**, shown in Figures 18-20, is a tubular lamp mounted just underneath the slide plate **221** parallel to the light transmission slot **222**. As shown in Figure 20, the VHO lamp **224** includes a polarizing filter **225** which filters the light emitted by the VHO lamp **224** prior to its being directed at a bottle.

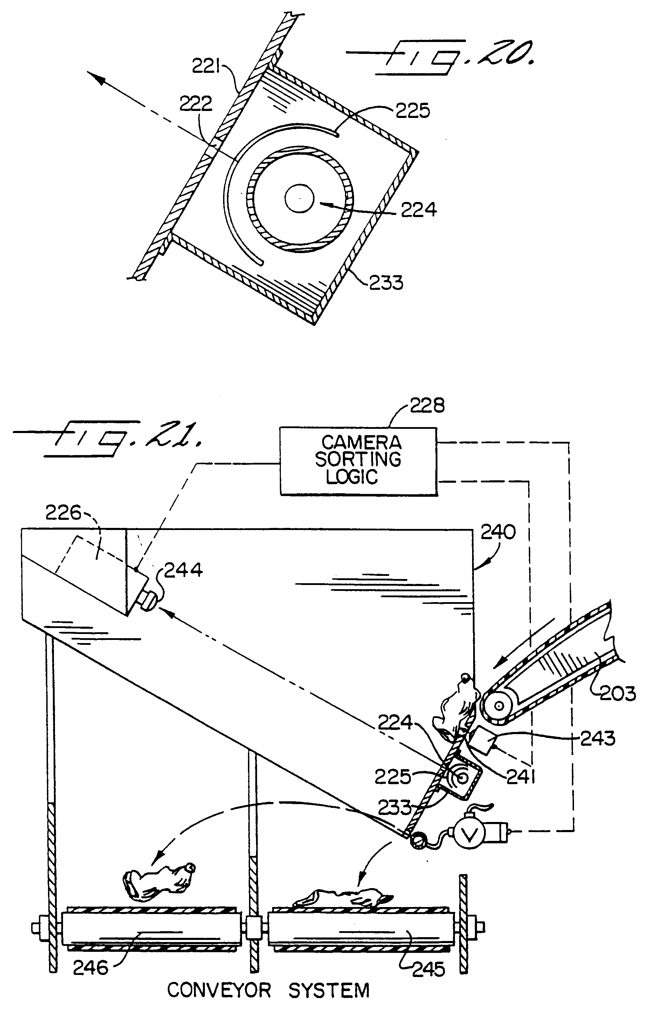

The camera **226**, shown in Figure 19, is a line scan camera of the type known to those in the art which detects light and converts the received light signal into an electrical signal readable by a microprocessor. The camera **226** is mounted so that its lens **227** points directly at the light transmission slot **222**. It has been discovered that orientation of camera is very important to accurate detection; a slight variation in lens orientation can create sufficient change in the quantity of light detected that sorting is inaccurate. As a result, it is preferred to mount the camera **226** on an adjustable mounting device so that final adjustments to camera orientation can be made on-line. The camera **226** is electronically connected through a microprocessor **228** with the air jets **229**. As seen in Figure 19, the lens **227** of the camera is fitted with a polarizing filter **234** oriented perpendicularly to the light source polarizing filter **225**. As a result of this relative orientation, no light emitted by the VHO lamp **224** reaches the camera **226** unless the light has been rotated by a bottle as it passes between the lamp **224** the and camera **226**. The light reaching the camera **226** is converted within the camera to an electrical signal which travels to the microprocessor **228**. If a quantity of light exceeding a predetermined amount reaches the camera **226**, the microprocessor **228** will signal the air jets **229** to remove that bottle from the stream.

The camera **226** also includes a green filter **237** through which it detects light to better distinguish between clear HDPE bottles and green PET bottles. Clear PET bottles transmit more light than green PET bottles, which transmit slightly more light than clear HDPE bottles. Colored HDPE bottles are opaque and thus do not pass light. The other bottles of the stream generally do not rotate light. Thus in theory if sufficient light is detected to indicate that a bottle is a PET bottle, that bottle is sorted, with the result being that all PET bottles are removed to a second PET stream, while all HDPE bottles and PVC bottles remain with the original stream. However, because the difference in light quantities detected for green PET bottles and clear HDPE bottles is relatively small, the camera lens **227** includes a green filter **237**, which significantly decreases the amount of light reaching the camera **226** when an HDPE bottle is detected but only slightly affects the amount of light reaching the camera **226** when a green PET bottle is detected. As a result, there is an increase in the difference in light quantity detected between these two bottle types, which leads to more accurate sortation.

It should be noted that the presence of an HDPE basecup on a PET bottle does not influence the sortation process. A PET bottle with a basecup will be displaced to the PET conveyor; as described below, the HDPE of the basecups is separated in a wash step following granulation.

The air jets **229** (Figure 18) comprise a hollow cylindrical plenum **231**, five solenoids **230** electronically connected to microprocessor **228**, a pressure unit (not shown) electrically connected to the solenoids **230** and pneumatically connected to the plenum **231**, and a plurality of openings **233** in the plenum **231**. The plenum **231** is mounted just beneath and adjacent the sortation slot **223**. The openings **233** are spaced one-half inch apart and are oriented so that air flow is substantially perpendicular to the sliding surface of the slide plate **221**. The air jets **229** are sufficiently forceful to displace a bottle between about 30.48 and 91.44 cm (1 and 3 feet) to a PET conveyor **235**.

In the illustrated embodiment, the camera **226** is configured to detect five lanes of bottles simultaneously. The microprocessor **228** includes multiple channels for receiving signals from the camera **226** and sending activation signals to the appropriate solenoid **230**.

An HDPE belt conveyor **236** is located directly beneath the lower edge of the slide plate **221** to collect HDPE and other bottles exiting the five HDPE/PET sorters **220** and to convey this collection to the HDPE sorters **280**. The PET belt conveyor **235** is located adjacent the HDPE conveyor **236** to collect PET bottles removed from the stream by the HDPE/PET sorters **220** and to convey them to PET sorters **240**.

During operation, a bottle exits the radial conveyor **203** and enters the slide plate **221**. As the bottle slides down the surface of the slide plate **221**, it passes over the light transmission slot **222**. Light emitted from the VHO lamp **224** is directed at the bottle after passing through the polarizing filter **225**. If the bottle rotates and transmits this light, some portion of the light travels through the polarizing filter **234** and is detected by the camera **226**. The light detected is converted by the camera **226** into an electric signal proportionate in magnitude to the amount of light detected. The signal travels to the microprocessor **228**, where it is compared in magnitude to a predetermined signal. If the magnitude of the signal from the camera **226** exceeds that of the predetermined signal. the microprocessor **228** will signal the appropriate solenoid **230** to activate the appropriate air jet **229** to displace the bottle to the PET conveyor **235**. If the magnitude of the signal does not exceed the level of the predetermined signal, either because the bottle does not rotate light or transmit sufficient light, the microprocessor **228** sends no signal, and the HDPE or other bottle is permitted to slide onto the HDPE belt conveyor **236**.

Following first the PET fraction, the PET belt conveyor **235** leads to the PET separation unit **238**, which is identical to an HDPE/PET separation unit **170** described above except that it comprises only three dividing subunits **239**. Each of these subunits **239** leads to a vibrating conveyor, upwardly inclined acceleration belt conveyor, and radial conveyor identical to that already described. The PET sorters **240** employed for the sortation of clear and green PET bottles differ from those described hereinabove only in that the camera **226** does not include a green filter **237**, both the camera **226** and the VHO lamp **224** further comprise a red filter **244**, and the PET sorter **240** further comprises a proximity detector **243**.

The red filter **244** is included in the PET sorters **240** because although green PET bottles and clear PET bottles do not transmit light identically, and thus could be sorted as described above, it is preferred that the difference in light detected for green PET bottles and light detected by clear PET bottles be as great as possible. The red filter **244** absorbs most of the light which passes through green PET bottles with the result that little light reaches the camera **226** when light is directed at a green bottle. Clear PET bottles still pass light in an amount detectable by the camera, and will thus signal the microprocessor **228** that light rotation has occurred.

It is desirable to remove the lesser fraction of any stream of bottles for two reasons. First, removing the lesser fraction lowers energy costs by reducing the number of times that air jet operates. Second, sortation accuracy is improved, because any imprecision in the bottle removal step, such as insufficient light rotation or an insufficiently forceful or misdirected air jet, will affect only the lesser fraction of bottles; the greater fraction of bottles is unaffected by the performance of the air jet and thus will end up correctly remaining with the stream. Thus the percentage of errors is decreased by sorting the lesser fraction rather than the greater fraction. In a typical stream, clear PET bottles comprise approximately 80 percent of all PET bottles. Thus in the sortation system as described herein, the air jet **229** would operate to remove approximately 4 of every 5 bottles. As a result, the sortation logic of the PET sorters **240** is reversed so that green PET bottles are sorted from the stream.

The proximity detector **243** can be any device known in the art to be suitable for detecting the presence of an object. It is mounted on the underside of the slide plate **221** just above the VHO lamp **224**. The slide plate **221** includes a second proximity detection slot **241** located just above the light transmission slot **222** through which the proximity detector **243** detects the presence of a bottle. The proximity detector **243** is also electronically connected to the microprocessor **228**.

In operation, the proximity detector **243** continuously scans through proximity detection slot **241** to see if an object is present. When the proximity detector **243** detects the presence of a bottle, it signals the microprocessor **228**. If the microprocessor **228** then receives a signal from the camera **226** that sufficient light was transmitted by the bottle, this indicates that a clear PET bottle is in position for sortation, and the microprocessor **228** fails to activate any solenoid **230**. As a result, the clear PET bottle is allowed to fall to the clear PET belt conveyor **245** located beneath the lower edge of the slide plate **221**. If instead after the microprocessor **228** has received a signal from the proximity detector **243** that a bottle is present it receives no signal from the camera **226** that sufficient light has reached the detector, this indicates a green PET bottle, so the microprocessor **228** signals the appropriate solenoid **230** to activate the air jets **229** to displace the bottle to a green PET belt conveyor **246** located adjacent a clear PET belt conveyor **245**. If no signal is received from the proximity sensor **243**, no bottle is present, so the air jet does not operate.

The green PET conveyor **246** leads to a final green PET processing station **247** wherein green PET bottles are granulated and washed by known methods. Similarly, the clear PET belt conveyor **245** leads to a final clear PET processing station **248** wherein clear PET bottles are granulated and washed by known methods. It is at this point that the HDPE of basecups is separated from the PET. The HDPE granules float on the wash water, while the denser PET granules sink. As a result, the HDPE can be skimmed from the wash water surface.

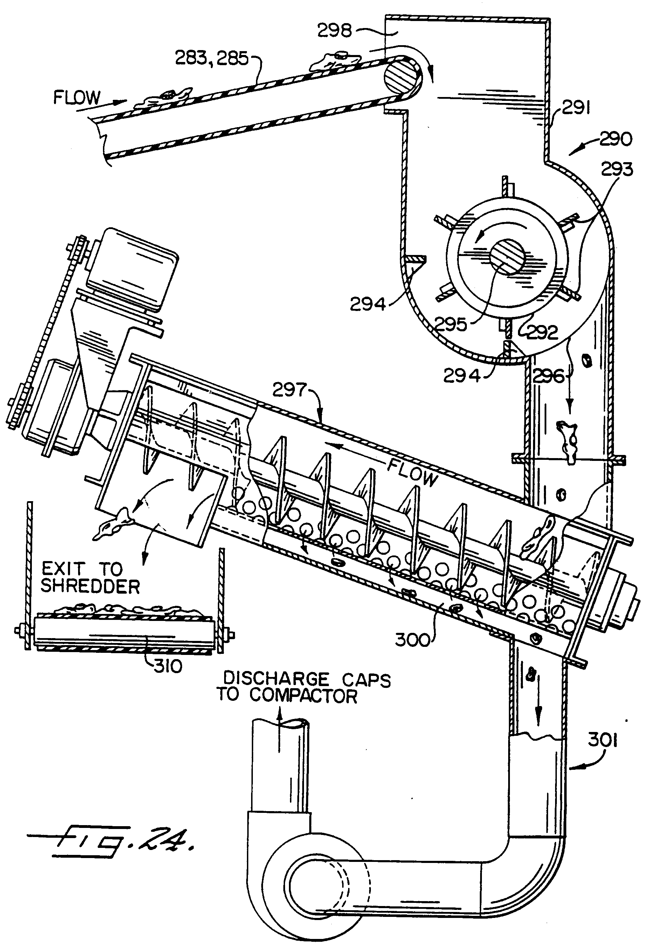

Turning now to the fraction of HDPE and other bottles exiting the HDPE/PET sorters **220**, the HDPE belt conveyor **236** collects this fraction and conveys these bottles to a screening auger conveyor **260** illustrated in Figures 22 and 23. The screening auger conveyor **260** is of a type known to those in the art comprising an elongate U-shaped a housing **261**, a rotatable threaded auger **265** attached at either end of housing **261** for conveying bottles, and a drive unit **266** for rotating the auger **265**. The U-shaped housing **261** includes an entrance opening **262**, an exit opening **263**, and a plurality of round openings **264** of sufficient area for passage of contaminants but of insufficient area for passage of bottles.

The stream of HDPE and other bottles exiting the HDPE/PET sorters **220** contains all material not removed from the original stream by the PET sorters **220**. This stream can still contain contaminants which will adversely affect the final HDPE product. As the stream is conveyed through the entrance **261**, the drive unit **266** rotates the threaded auger **265** and thereby conveys the bottles within the stream to the exit opening **263**. The smaller contaminants pass through the openings **264** and drop onto a funnel **268** and slide therefrom onto a contaminant belt conveyor **269** for disposal. The HDPE and other bottles exiting auger the conveyor **260** drop onto a second HDPE belt conveyor **267** for conveyance to further sortation.

The upstreammost end of the HDPE belt conveyor **267** leads to the a HDPE separation unit **270**, which is identical to the HDPE/PET separation unit **170** described hereinabove except that it comprises only three dividing subunits **271**. Each subunit **271** leads to a vibrating conveyor, upwardly inclined acceleration belt conveyor, and radial conveyor identical to that already described herein. The HDPE sorters **280** employed for the sortation of clear HDPE from colored HDPE and other bottles differ from those described above for the HDPE/PET separation only in that the camera **226** has no green filter **237** and the HDPE/PVC sorters **280** further comprise a proximity detector **281** for reversing the sortation logic.

In a typical stream, the large majority of bottles will be clear HDPE bottles. As clear HDPE bottles rotate light but colored HDPE and other bottles do not, concerns about energy savings point to a reversal of logic as described hereinabove for the separation of PET; accordingly, the HDPE sorters **280** further comprise a proximity detector **281** connected to the air jets **229** to detect when a bottle is in position for detection. The sorting logic follows the pattern described for PET separation. When the microprocessor **228** receives a signal from the proximity detector **281** that a bottle is present, then receives a signal from the camera **226** that light was rotated by that bottle, this indicates that a clear HDPE bottle is in position for sortation, and it is allowed to fall unsorted to a clear HDPE belt conveyor **283**. When instead the microprocessor **228** receives a signal from the proximity detector **281** that a bottle is present, but receives no signal from the camera **226** that light has been rotated, this indicates that a colored HDPE or other bottle is in position for sorting, and the appropriate air jet **229** operates to displace that bottle to a colored HDPE/other bottle belt conveyor **285**. If no signal is received from the proximity sensor **281**, the air jet **229** does not operate.

The clear HDPE belt conveyor **283** and the colored HDPE/other bottle belt conveyor **285** each lead to a decapper **290** shown broadly in Figure 23. Each decapper **290** comprises a chamber **291** having an entrance opening **298** and an exit opening **296**, two stationary blades **294** attached to the inner wall of the chamber **291** and extending perpendicularly from the inner wall, a rotatable hub **292** having six striking blades **293** equally spaced circumferentially about and extending radially outwardly from the rotatable hub **292**, and a drive unit **295** for the rotatable hub **292**. The outermost striking edge of each of the striking blades **293** moves into parallel adjacent but noncontacting relation with the contact edge of the stationary blades **294** as the rotable hub **292** rotates. A preferred clearance between the contact edge and the striking edge is 0.64 to 0.95 cm (1/4 to 3/8 inches).

In operation, bottles pass through the entrance opening **298** into the chamber **291**. The striking blades **293** rotate and in doing so strike each bottle. The contact forces the bottle against a stationary blade **294**, at which point the bottle is crushed with sufficient force to disengage the cap.

The housing exit opening **296** empties into a screening auger conveyor **297** of the type described hereinabove. The conveyor housing includes round openings of a size sufficient for caps to pass therethrough but too small for bottles to pass therethrough. Beneath the openings is an inclined tunnel **300** leading to a vacuum unit **301**. Caps removed from bottles pass through the openings in the conveyor, slide down the inclined surface of the tunnel **300**, and pass into the vacuum unit **301** for disposal. Bottles are conveyed through the exit of the conveyor and to a belt conveyor **310** leading to a final processing station where the bottles are granulated and washed. It is at this point that other plastics are separated from colored HDPE; in the washing step, the granules of this other plastics are more dense than the wash water and sink to the bottom of the wash basin. The HDPE granules float on the wash water and thus can be skimmed through known techniques. The granules of other plastics are then discarded.

## Claims

1. A method of separating individual plastic items from a mixture of plastic items, and that is particularly useful in recovering recyclable plastics from waste sources such as municipal waste, and in which each of the individual items is formed predominantly of a single type of plastic, but in which different individual items within the mixture are made of different types of plastic, the method comprising:
measuring the effect that each individual item in a stream of items has on light of a predetermined character directed at the item from a source (224) and measured at a detector (226) opposed to the source as the items in the stream are successively directed past the source and the detector; and
selectively removing individual items from the stream based upon a comparison of the light produced by the source (224) and any light received at the detector (226);
characterised in that the light from the individual items is detected by a line scan camera detector, which comprises the detector (226), as the items in the stream move continuously past the light source (224) and detector (226).

2. A method according to claim 1, further comprising the step of determining whether an individual item is proximate to the source (224) and detector (226), so that an item is removed if it is determined that an item is proximate to the source and detector and if no light is detected by the detector as an item passes.

3. A method according to claim 1 or 2, wherein the step of measuring the effect comprises directing the light from the source (224) to each item through a first polarizer (225), and directing the light from the item to the detector (226) through a second polarizer (234), and wherein the second polarizer is oriented perpendicularly to the first polarizer so that, in the absence of rotation of polarized light by an item, the first and second polarizers prevent light from the source from reaching the detector, but wherein rotation of light by an item permits light from the source to reach the detector.

4. A method according to claim 3, wherein the step of measuring the effect further comprises directing the light from the source (224) through a first colorizing filter prior to detecting the light at the item, and directing the light through a second colorizing filter (237; 244) after directing the light through the item, so that most of the light rotated by clear items reaches the detector, but most of the light rotated by certain colorized items does not reach the detector.

5. A method according to any preceding claim, wherein the step of measuring the effect comprises measuring the effect that an item has on the light that will define the mixture into a greater fraction and a lesser fraction, and wherein the step of selectively removing individual items from the stream comprises selectively removing the lesser fraction from the stream so that the greater fraction continues as a stream.

6. A method according to any preceding claim, wherein the step of measuring the effect that each individual item has on light of a predetermined character comprises measuring the effect that each individual item comprising a bottle in a stream of plastic bottles has on light of a predetermined character directed at the bottle and measured at a detector opposed to the source as a stream of plastic bottles is successively directed past the source and the detector.

7. A method according to claim 6, wherein the stream of plastic bottles is a mixture of types of plastic bottles selected from the group consisting of: clear polyethylene terephthalate bottles, green polyethylene terephthalate bottles, clear high density polyethylene bottles, colored high density polyethylene bottles, polyvinylchloride bottles, polypropylene bottles, polycarbonate bottles and polystyrene bottles.

8. A method according to claim 6 or 7, which further comprises the step of positioning the plastic bottles into a preferred orientation which maximizes the exposure of each bottle between the light source and the detector, a preferred position relative to the detector which maximizes the accuracy of detection, and a preferred distance from other bottles in the stream which minimizes the risk of detecting more than one bottle at once prior to the step of measuring the effect.

9. A method according to any preceding claim, wherein the items to be separated comprise a mixture of single plastic bottles and interlocked bottle clusters, the method including, prior to the step of measuring the effect, directing against each individual single bottle and interlocked bottle cluster, an air jet (103) which is sufficiently forceful to displace a single bottle to a collection means (136) but insufficiently forceful to displace an interlocked bottle cluster to the collection means.

10. A method according to claim 9, wherein said interlocked bottle clusters comprise small interlocked bottle clusters and large interlocked bottle clusters, and wherein said mixture further comprises paper and plastic film items, metal items, and undersized items, the method further comprising the steps of:
removing paper and plastic film items;
removing metal items;
conveying single bottles, interlocked bottle clusters, and undersized items over a plurality of openings (115) of a size sufficient for single bottles, small interlocked bottle clusters, or undersized items to pass therethrough but which openings are too small for large interlocked bottle clusters to pass therethrough; and
conveying single bottles, small interlocked bottle clusters and undersized items over a plurality of openings (163) of a size sufficient for undersized items to pass therethrough but too small for single bottles or small interlocked bottle clusters.

11. A method according to claim 9 or 10, comprising the further step of disengaging a bale (B) of engaged crushed single bottles and interlocked bottle clusters to produce individual single bottles and interlocked bottle clusters prior to the step of measuring the effect.

12. A method according to any of claims 9 to 11, which includes disengaging bottles of an interlocked bottle cluster by striking the individual bottles of an interlocked bottle cluster with opposed movable fingers (85, 87) to create a separating torsional force, the opposed movable fingers comprising two sets of intermeshing but noncontacting fingers (85, 87) mounted on movable supports (84, 86).

13. A method according to claim 12, which comprises the further steps of:
(a) detecting the absence of finger motion, wherein the absence of finger motion indicates that a single bottle or interlocked bottle cluster is lodged between the two sets of rotating fingers (85, 87) and is preventing the fingers from rotating; and
(b) reversing the angular direction of finger motion after the step of sensing the absence of finger motion.

14. A method according to any preceding claim for separating plastic items comprising plastic bottles having caps attached thereto, the method including, subsequent to the selective removal step, striking a plastic bottle having an attached cap with a striking blade (293) as the striking blade moves in adjacent, noncontacting relation with a stationary blade (294) with sufficient force that the cap separates from the plastic bottle.

15. A method according to any preceding claim, which includes:
forming a plurality of continuously moving streams from the mixture of items;
passing light through the moving items in said plurality of streams; and
simultaneously detecting, with said line scan camera (226), light transmitted through said moving items in said plurality of streams.

16. A method according to any preceding claim, wherein the step of measuring the effect that each individual item has on light from the light source (224) is carried out as the items are successively directed past the source (224) and line scan camera detector (226) in a continuously moving, sliding stream.

17. An apparatus for separating individual plastic items from a mixed stream of plastic items, and that is particularly useful in recycling plastic items from waste sources such as municipal waste, and in which each of the individual plastic items is formed predominantly of a single type of plastic, but in which different individual items within the mixture are made of different types of plastic, the apparatus comprising:
(a) a light source (224) for emitting light of a predetermined character;
(b) a detector (226) opposed to said light source for measuring the effect each individual item has on light emitted by said light source as the individual items in the stream are successively directed between said light source and said detector; and
(c) sortation means (229, 231) responsive to said detector (226) for selectively removing individual items from the stream based on a comparison of the light produced by said source and any light detected by said detector;
characterised by a line scan camera detector which comprises the detector (226), the line scan camera detector being operable to detect the light from the individual items as the items in the stream move continuously past the light source (224) and detector (226).

18. An apparatus according to claim 17, wherein a first polarizer (225) is located between said light source (224) and the continuously moving stream of individual items for filtering light emitted by said light source, and wherein a second polarizer (234) is located between the stream of items and said detector (226) for filtering light which passes through each individual item, and wherein said second polarizer (234) is oriented perpendicularly to said first polarizer (225) so that virtually no light reaches the detector unless individual items in the stream rotate the light exiting the first polarizer, but so that detection of light at the detector indicates of the presence of an item.

19. An apparatus according to claim 18, which further comprises proximity sensing means (243) for determining when an item is in position to pass between said light source (226) and said detector (224); and
in which said sortation means (229, 231) is also responsive to said proximity sensing means so that if said proximity sensing means detects the presence of an item and said detector detects the presence of an item and said detector detects virtually no rotation of light by an item, said sortation means will remove the item from the stream, and if said proximity sensing means detects the presence of an item and said detector detects rotation of light, said sortation means will not remove the item from the stream.

20. An apparatus according to claim 17, 18 or 19, in which said sortation means (229, 231) comprise means for directing a jet of air at the item to be removed from the stream.

21. An apparatus according to any of claims 17 to 20, and further comprising means (180) for positioning an item in a preferred orientation that maximises the exposure of the item between said light source (226) and said detector (224), means (221) for positioning an item relative to said detector that maximises detection accuracy, and means (200) for positioning an item relative to other items in the stream to minimize the risk of detecting more than one item at once.

22. An apparatus according to claim 21, in which said means (221) for positioning an item relative to said detector comprises a sliding surface inclined downwardly at an angle of between about 40 and 70 degrees to the horizontal located between said light source (226) and said detector (224) for controlling the path of an item between said light source and said detector.

23. An apparatus according to claim 21, or 22, in which said means (180) for positioning an item in a preferred orientation comprises a substantially semi-cylindrical chute (183), the diameter of said semi-cylindrical chute being larger than the width of an item but smaller than the length of an item, so that the item is oriented with its longitudinal axis substantially parallel with the longitudinal axis of said semi-cylindrical chute.

24. An apparatus according to claim 23, in which said means (180) for positioning an item includes vibrating means (185) for agitating an item into an orientation wherein its longitudinal axis is substantially parallel with the longitudinal axis of said semi-cylindrical chute (183).

25. An apparatus according to any of claims 17 to 24, including a screening assembly for separating items comprising single bottles from a mixture comprising single plastic bottles, small interlocked bottle clusters, large interlocked bottle clusters, and undersized items, said screening assembly including:
(a) a first screening means (108) for separating said large interlocked bottle clusters from said mixture, said first screening assembly means having a plurality of openings (106), each of said openings being of a size sufficient for a single bottle or a small interlocked bottle cluster to pass therethrough but too small for a large interlocked bottle cluster to pass therethrough;
(b) a second screening means (102) for removing undersized items, said second screening means having a plurality of openings (113), each of said openings being of a size sufficient for an undersized item to pass therethrough but of a size insufficient for a single bottle or a small interlocked bottle cluster to pass therethrough; and
(c) an air jet means (103) for separating single bottles and small interlocked bottle clusters, said air jet means being configured to direct an air blast at a single bottle or a small interlocked bottle cluster with sufficient force to displace a single bottle to a collection means (136), but with insufficient force to displace a small interlocked bottle cluster to the collection means.

26. An apparatus according to any of claims 17 to 25, including a decapper (290) for removing caps attached to items comprising plastic bottles, said decapper including:
(a) a chamber (291) having an inner wall;
(b) a stationary blade (294) attached to said inner wall and having a contact edge, said contact edge extending away from said inner wall;
(c) a striking blade (293) having a striking edge; and
(d) means (292, 295) for rotating said striking blade past said stationary blade attached to said chamber and configured such that as said striking blade is rotated, said striking edge moves to a position in which said striking edge is substantially parallel to said contact edge and is in adjacent but noncontacting relation with said contact edge.

27. An apparatus according to any of claims 17 to 26, including disengaging apparatus (80) for disengaging items comprising single bottles from interlocked bottle clusters, said disengaging apparatus including:
(a) a housing (81);
(b) a first movable support (84) for fingers attached within said housing (81);
(c) a first plurality of fingers (85) each having a base end and a striking end, with said base end attached to said first movable support (84) and said striking end extending away from said support;
(d) a second movable support (86) for fingers attached within said housing (81);
(e) a second plurality of fingers (87) each having a base end and a striking end, said base end being attached to said second movable support (86), said striking end extending away from said support; and
(f) means (88, 88a) for rotating said movable supports, wherein said first movable support and said second movable support are positioned relative to each other so that, as said first movable support rotates said first plurality of fingers clockwise, and as said second movable support rotates said second plurality of fingers counterclockwise, said striking ends of said first plurality of fingers intermesh but do not contact said striking ends of said second plurality of fingers.

28. An apparatus according to claim 27, which further comprises means (89) for sensing that finger member motion has been halted, and in which said means for moving said movable supports includes means for reversing the angular direction of each of said movable supports which is operably connected to said means for sensing that finger member motion has been halted, such that if said means for sensing halting of finger member motion indeed senses that such motion has been halted, said means for reversing the angular direction operates to cause said first plurality of fingers to rotate counterclockwise and said second plurality of fingers to rotate clockwise.

29. An apparatus according to any of claims 17 to 28, including conveyor means (180, 200, 204, 221) for simultaneously presenting a plurality of streams of continuously moving items to said line scan camera detector (226) for simultaneous detection thereby of the quantity of light transmitted through individual items in said plurality of streams.

30. An apparatus according to any of claims 17 to 29, including a conveyor (221) for presenting a continuously moving, sliding stream of items to said line scan camera detector (226).

## Patentansprüche

1. Verfahren zum Trennen von individuellen Kunststoffgegenständen von einer Mischung von Kunststoffgegenständen, und das besonders bei der Rückgewinnung von aufbereitbarem Kunststoff von Abfallquellen wie städtischem Abfall nützlich ist, und in dem jeder der individuellen Gegenstände hauptsächlich aus einer einzigen Kunststoffart gebildet ist, in dem aber verschiedene individuelle Gegenstände in der Mischung aus verschiedenen Arten von Kunststoff hergestellt sind, wobei das Verfahren folgendes umfasst:
der Effekt, den jeder individuelle Gegenstand in einem Gegenstandsstrom auf Licht eines vorbestimmten Merkmals hat, das von einer Quelle (224) auf den Gegenstand gerichtet wird, und an dem Detektor (226) gegenüber zur Quelle gemessen wird, wird gemessen, während die Gegenstände in dem Strom nacheinander an der Quelle und dem Detektor vorbeigerichtet werden; und
individuelle Gegenstände werden wahlweise von dem Strom entfernt, beruhend auf einem Vergleich des Lichts, das von der Quelle (224) hergestellt wird, und irgendwelchem Licht, das an dem Detektor (226) empfangen wird;
dadurch gekennzeichnet, daß das Licht von den individuellen Gegenständen von einem Zeilenabtastkameradetektor aufgefunden wird, der ein Teil des Detektors (226) bildet, während die Gegenstände in dem Strom sich kontinuierlich an der Lichtquelle (224) und dem Detektor (226) vorbeibewegen.

2. Verfahren nach Anspruch 1, das weiterhin den Schritt umfasst, zu bestimmen, ob ein individueller Gegenstand in der Nähe der Quelle (224) und des Detektors (226) ist, so daß ein Gegenstand entfernt wird, wenn bestimmt wird, daß ein Gegenstand in der Nähe der Quelle und des Detektors ist, und wenn kein Licht von dem Detektor aufgefunden wird, während ein Gegenstand vorbeigeht.

3. Verfahren nach Anspruch 1 oder 2, in dem der Schritt des Messens des Effekts umfasst, das Licht von der Quelle (224) durch einen ersten Polarisator (225) auf jeden Gegenstand zu richten, und das Licht von dem Gegenstand durch einen zweiten Polarisator (234) auf den Detektor (226) zu richten, und in dem der zweite Polarisator senkrecht zu dem ersten Polarisator ausgerichtet ist, so daß die ersten und zweiten Polarisatoren bei Abwesenheit der Drehung von polarisiertem Licht durch einen Gegenstand verhindern, daß Licht von der Quelle den Detektor erreicht, in dem aber Drehung von Licht durch einen Gegenstand gestattet, daß Licht von der Quelle den Detektor erreicht.

4. Verfahren nach Anspruch 3, in dem der Schritt des Messens des Effekts weiterhin umfasst, das Licht von der Quelle (224) durch einen ersten färbenden Filter zu richten, bevor das Licht an dem Gegenstand aufgefunden wird, und das Licht durch einen zweiten färbenden Filter (237; 244) zu richten, nachdem das Licht durch den Gegenstand gerichtet wurde, so daß der größte Teil des Lichts, das von farblosen Gegenständen gedreht wird, den Detektor erreicht, aber der größte Teil des Lichts, das von bestimmten gefärbten Gegenständen gedreht wird, nicht den Detektor erreicht.

5. Verfahren nach einem der vorhergehenden Ansprüche, in dem der Schritt des Messens des Effekts umfasst, den Effekt zu messen, den ein Gegenstand auf das Licht hat, das die Mischung in einen größeren Bruchteil und einen kleineren Bruchteil definieren wird, und in dem der Schritt, wahlweise individuelle Gegenstände von dem Strom zu entfernen, umfasst, den geringeren Bruchteil wahlweise von dem Strom zu entfernen, so daß der größere Bruchteil als ein Strom weitergeht.

6. Verfahren nach einem der vorhergehenden Ansprüche, in dem der Schritt des Messens des Effekts, den jeder individuelle Gegenstand auf Licht eines vorbestimmten Kennzeichens hat, umfasst, den Effekt zu messen, den jeder individuelle Gegenstand, der eine Flasche in einem Strom von Kunststoffflaschen umfasst, auf Licht eines vorbestimmten Kennzeichens hat, das auf die Flasche gerichtet wird, und an einem Detektor gemessen wird, der der Quelle gegenüberliegt, während ein Strom von Kunststoffflaschen nacheinander an der Quelle und dem Detektor vorbeigerichtet wird.

7. Verfahren nach Anspruch 6, in dem der Strom von Kunststoffflaschen eine Mischung von Arten von Kunststoffflaschen ist, die von der Gruppe ausgewählt sind, die aus folgendem bestehen: farblosen Polyethylenterephthalatflaschen, grünen Polyethylenterephthalatflaschen, farblosen Polyethylenflaschen hoher Dichte, gefärbten Polyethylenflaschen hoher Dichte, Polyvinylchloridflaschen, Polypropylenflaschen, Polycarbonatflaschen und Polystyrenflaschen.

8. Verfahren nach Anspruch 6 oder 7, das weiterhin den Schritt umfasst, die Kunststoffflaschen in eine bevorzugte Ausrichtung anzuordnen, die die Aussetzung jeder Flasche zwischen der Lichtquelle und dem Detektor maximiert, eine bevorzugte Stellung relativ zu dem Detektor, die die Genauigkeit der Auffindung maximiert, und einen bevorzugten Abstand von anderen Flaschen in dem Strom, die das Risiko, vor dem Schritt des Messens des Effekts mehr als eine Flasche auf einmal aufzufinden, minimal hält.

9. Verfahren nach einem der vorhergehenden Ansprüche, in dem die Gegenstände, die getrennt werden sollen, eine Mischung von einzelnen Kunststoffflaschen und aneinandergekuppelten Flaschenanhäufungen umfassen, wobei das Verfahren vor dem Schritt des Messens des Effekts einschließt, gegen jede individuelle einzelne Flasche und gegen jede aneinandergekuppelte Flaschenanhäufung einen Luftstrahl (103) zu richten, der kräftig genug ist, um eine einzelne Flasche auf ein Sammelmittel (136) zu schieben, aber nicht kräftig genug ist, um eine aneinandergekuppelte Flaschenanhäufung auf das Sammelmittel zu schieben.

10. Verfahren nach Anspruch 9, in dem die aneinandergekuppelte Flaschenanhäufungen kleine aneinandergekuppelte Flaschenanhäufungen und große aneinandergekuppelte Flaschenanhäufungen umfassen, und in dem die Mischung weiterhin Papier- und Kunststofffilmgegenstände umfasst, Metallgegenstände, und Untermaßgegenstände, wobei das Verfahren weiterhin die folgenden Schritte umfasst:
Papier- und Kunststofffilmgegenstände werden entfernt;
Metallgegenstände werden entfernt; einzelne Flaschen, aneinandergekuppelte Flaschenanhäufungen, und Untermaßgegenstände werden über eine Vielzahl von Öffnungen (115) mit einer Größe gefördert, die ausreicht, daß einzelne Flaschen, kleine aneinandergekuppelte Fiaschenanhäufungen, oder Untermaßgegenstände dadurchgehen, wobei aber die Öffnungen zu klein sind, daß große aneinandergekuppelte Flaschenanhäufungen dadurchgehen; und
einzelne Flaschen, kleine aneinandergekuppelte Flaschenanhäufungen, und Untermaßgegenstände werden über eine Vielzahl von Öffnungen (163) mit einer Größe gefördert, die ausreicht, daß Untermaßgegenstände dadurchgehen, die aber für einzelne Flaschen oder kleine aneinandergekuppelte Flaschenanhäufungen zu klein sind.

11. Verfahren nach Anspruch 9 oder 10, das den weiteren Schritt umfasst, einen Ballen (B) von ineinandergreifenden zerdrückten einzelnen Flaschen und aneinandergekuppelten Flaschenanhäufungen zu trennen, um individuelle einzelne Flaschen und aneinandergekuppelte Flaschenanhäufungen vor dem Schritt des Messens des Effekts herzustellen.

12. Verfahren nach einem der Ansprüche 9 bis 11, das einschließt, Flaschen einer aneinandergekuppelten Flaschenanhäufung zu trennen, indem die individuellen Flaschen einer aneinandergekuppelten Flaschenanhäufung mit gegenüberliegenden bewegbaren Fingern (85, 87) angestoßen werden, um eine trennende Torsionskraft zu schaffen, wobei die gegenüberliegenden bewegbaren Finger zwei Sätze von ineinandergreifenden, sich aber nicht berührenden Fingern (85, 87) umfassen, die auf bewegbaren Trägern (84, 86) angebracht sind.

13. Verfahren nach Anspruch 12, das die weiteren folgenden Schritte umfasst:
(a) die Abwesenheit von Fingerbewegung wird aufgefunden, wobei die Abwesenheit von Fingerbewegung anzeigt, daß eine einzelne Flasche oder eine aneinandergekuppelte Flaschenanhäufung zwischen den beiden Sätzen von sich drehenden Fingern (85, 87) angeordnet ist, und die Finger daran hindert, sich zu drehen;
(b) die Winkelrichtung der Fingerbewegung wird nach dem Schritt der Erfassung der Abwesenheit von Fingerbewegung umgekehrt.

14. Verfahren nach einem der vorhergehenden Ansprüche zum Trennen von Kunstoffgegenständen, die Kunststoffflaschen mit daran befestigten Kappen umfassen, wobei das Verfahren einschließt, nach dem wahlweisen Entfernungsschritt eine Kunststoffflasche mit einer befestigten Kappe mit einer Anstoßklinge (293) anzustoßen, während die Anstoßklinge sich in einem benachbarten, nicht berührenden Verhältnis mit einer ortsfesten Klinge (294) mit ausreichender Kraft bewegt, so daß die Kappe sich von der Kunststoffflasche trennt.

15. Verfahren nach einem der vorhergehenden Ansprüche, das folgendes einschließt:
eine Vielzahl von sich kontinuierlich bewegenden Strömen wird von der Mischung von Gegenständen gebildet;
Licht wird durch die sich bewegenden Gegenstände in der Vielzahl von Strömen gegeben;
mit der Zeilenabtastkamera (226) wird gleichzeitig Licht aufgefunden, das durch die sich bewegenden Gegenstände in der Vielzahl von Strömen übertragen wird.

16. Verfahren nach einem der vorhergehenden Ansprüche, in dem der Schritt des Messens des Effekts, den jeder individuelle Gegenstand auf Licht von der Lichtquelle (224) hat, durchgeführt wird, während die Gegenstände nacheinander an der Quelle (224) und dem Zeilenabtastdetektor (226) in einem sich kontinuierlich bewegenden gleitenden Strom vorbeigerichtet werden.

17. Gerät zum Trennen von individuellen Kunststoffgegenständen von einem gemischten Strom von Kunststoffgegenständen, und das besonders bei der Aufbereitung von Kunststoffgegenständen von Abfallquellen wie städtischem Abfall nützlich ist, und in dem jeder der individuellen Kunststoffgegenstände hauptsächlich aus einer einzigen Kunststoffart gebildet ist, in dem aber verschiedene individuelle Gegenstände in der Mischung aus verschiedenen Arten von Kunststoff hergestellt sind, wobei das Gerät folgendes umfasst:
(a) eine Lichtquelle (224) zum Abgeben von Licht eines vorbestimmten Kennzeichens;
(b) einen Detektor (226), der der Lichtquelle gegenüberliegt, um den Effekt zu messen, den jeder individuelle Gegenstand auf Licht hat, das von der Lichtquelle abgegeben wird, während die individuellen Gegenstände in dem Strom nacheinander zwischen die Lichtquelle und den Detektor gerichtet werden; und
(c) ein Sortiermittel (229, 231), das auf den Detektor (226) reagiert, um individuelle Gegenstände wahlweise von dem Strom zu entfernen, beruhend auf einem Vergleich des Lichts, das von der Quelle hergestellt wird, und irgendwelchem Licht, das von dem Detektor aufgefunden wird;
gekennzeichnet durch einen Zeilenabtastkameradetektor, der den Detektor (226) umfasst, wobei der Zeilenabtastkameradetektor betrieben werden kann, um das Licht von den individuellen Gegenständen aufzufinden, während die Gegenstände in dem Strom sich kontinuierlich an der Lichtquelle (224) und an dem Detektor (226) vorbeibewegen.

18. Gerät nach Anspruch 17, in dem ein erster Polarisator (225) zwischen der Lichtquelle (224) und dem sich kontinuierlich bewegenden Strom von individuellen Gegenständen angeordnet ist, um Licht zu filtern, das von der Lichtquelle abgegeben wird, und in dem ein zweiter Polarisator (234) zwischen dem Strom von Gegenständen und dem Detektor (226) angeordnet ist, um Licht zu filtern, das durch jeden individuellen Gegenstand geht, und in dem der zweite Polarisator (234) senkrecht zu dem ersten Polarisator (225) ausgerichtet ist, so daß praktisch kein Licht den Detektor erreicht, außer wenn individuelle Gegenstände in dem Strom das Licht drehen, das von dem ersten Polarisator austritt, aber so, daß Auffindung von Licht an dem Detektor die Gegenwart eines Gegenstandes anzeigt.

19. Gerät nach Anspruch 18, das weiterhin ein Nähenerfassungsmittel (243) umfasst, um zu bestimmen, wann ein Gegenstand in der Stellung ist, um zwischen der Lichtquelle (226) und dem Detektor (224) durchzugehen; und in dem das Sortiermittel (229, 231) auch auf das Nähenerfassungsmittel reagiert, so daß, falls das Nähenerfassungsmittel die Gegenwart eines Gegenstandes auffindet, und der Detektor praktisch keine Drehung von Licht durch einen Gegenstand auffindet, das Sortiermittel den Gegenstand von dem Strom entfernen wird, und, falls das Nähenerfassungsmittel die Gegenwart eines Gegenstandes auffindet, und der Detektor Drehung des Lichts auffindet, das Sortiermittel den Gegenstand nicht von dem Strom entfernen wird.

20. Gerät nach Anspruch 17, 18 oder 19, in dem das Sortiermittel (229, 231) ein Mittel umfasst, um einen Strahl von Luft auf den Gegenstand zu richten, der von dem Strom entfernt werden soll.

21. Gerät nach einem der Ansprüche 17 bis 20, und das weiterhin ein Mittel (180) umfasst, um einen Gegenstand in eine bevorzugte Ausrichtung anzuordnen, die die Aussetzung des Gegenstandes zwischen der Lichtquelle (226) und dem Detektor (224) maximiert, ein Mittel (221), um einen Gegenstand relativ zu dem Detektor anzuordnen, das die Auffindungsgenauigkeit maximiert, und ein Mittel (200), um einen Gegenstand relativ zu anderen Gegenständen in dem Strom anzuordnen, um das Risiko, mehr als einen Gegenstand auf einmal aufzufinden, minimal zu halten.

22. Gerät nach Anspruch 21, in dem das Mittel (221) zur Anordnung eines Gegenstandes relativ zu dem Detektor eine gleitende Oberfläche umfasst, die mit einem Winkel von zwischen ungefähr 40 und 70 Grad zu Waagerechten nach unten geneigt ist, die zwischen der Lichtquelle (226) und dem Detektor (224) angeordnet ist, um den Weg eines Gegenstandes zwischen der Lichtquelle und dem Detektor zu steuern.

23. Gerät nach Anspruch 21 oder 22, in dem das Mittel (180) zur Anordnung eines Gegenstandes in einer bevorzugten Ausrichtung eine im wesentlichen halbzylindrische Rutsche (183) umfasst, wobei der Durchmesser der halbzylindrischen Rutsche größer als die Breite eines Gegenstandes ist, aber kleiner als die Länge eines Gegenstandes, so daß der Gegenstand mit seiner Längsachse im wesentlichen parallel zu der Längsachse der halbzylindrischen Rutsche ausgerichtet ist.

24. Gerät nach Anspruch 23, in dem das Mittel (180) zur Anordnung eines Gegenstandes ein Vibrationsmittel (185) einschließt, um einen Gegenstand in eine Ausrichtung zu bewegen, in der seine Längsachse im wesentlichen parallel zu der Längsachse der halbzylindrischen Rutsche (183) ist.

25. Gerät nach einem der Ansprüche 17 bis 24, das eine Siebanordnung zum Trennen von Gegenständen einschließt, die einzelne Flaschen von einer Mischung umfassen, die einzelne Kunststoffflaschen umfasst, kleine aneinandergekuppelte Flaschenanhäufungen, große aneinandergekuppelte Flaschenanhäufungen, und Untermaßgegenstände, wobei die Siebanordnung folgendes einschließt:
(a) ein erstes Siebmittel (108) zum Trennen der großen aneinandergekuppelten Flaschenanhäufungen von der Mischung, wobei das erste Siebanordnungsmittel eine Vielzahl von Öffnungen (106) hat, wobei jede der Öffnungen eine Größe hat, die ausreicht, so daß eine einzelne Flasche oder eine kleine aneinandergekuppelte Flaschenanhäufung dadurchgehen kann, die aber zu klein ist, so daß eine große aneinandergekuppelte Flaschenanhäufung dadurchgehen kann;
(b) ein zweites Siebmittel (102) zum Entfernen von Untermaßgegenständen, wobei das zweite Siebmittel eine Vielzahl von Öffnungen (113) hat, wobei jeder der Öffnungen eine Größe hat, die ausreicht, so daß ein Untermaßgegenstand dadurchgehen kann, aber eine unzureichende Größe hat, so daß eine einzelne Flasche oder eine kleine aneinandergekuppelte Flaschenanhäufung dadurchgehen kann; und
(c) ein Luftstrahlmittel (103) zum Trennen von einzelnen Flaschen und kleinen aneinandergekuppelten Flaschenanhäufungen, wobei das Luftstrahlmittel so aufgebaut ist, um einen Luftstoß auf eine einzelne Flasche oder eine kleine aneinandergekuppelte Flaschenanhäufung mit ausreichender Kraft zu richten, um eine einzelne Flasche auf ein Sammelmittel (136) zu schieben, aber mit unzureichender Kraft, um eine kleine aneinandergekuppelte Flaschenanhäufung auf das Sammelmittel zu schieben.

26. Gerät nach einem der Ansprüche 17 bis 25, das ein Entkappungsgerät (290) einschließt, um Kappen zu entfernen, die an Gegenständen befestigt sind, die Kunststoffflaschen umfassen, wobei das Entkappungsgerät folgendes einschließt:
(a) eine Kammer (291) mit einer inneren Wand;
(b) eine ortsfeste Klinge (294), die an der inneren Wand befestigt ist, und eine Berührungskante hat, wobei die Berührungskante sich von der inneren Wand fort erstreckt;
(c) eine anstoßende Klinge (293) mit einer anstoßenden Kante; und
(d) ein Mittel (292, 295), um die anstoßende Klinge an der ortsfesten, an der Kammer befestigten Klinge vorbei zu drehen, und das so aufgebaut ist, daß, während die Anstoßklinge gedreht wird, die Anstoßkante sich in eine Stellung bewegt, in der die Anstoßkante im wesentlichen parallel zu der Berührungskante ist, und in einem benachbarten, aber sich nicht berührenden Verhältnis mit der Berührungskante ist.

27. Gerät nach einem der Ansprüche 17 bis 26, das ein Trenngerät (80) einschließt, um Gegenstände, die einzelne Flaschen umfassen, von aneinandergekuppelten Flaschenanhäufungen zu trennen, wobei das Trenngerät folgendes einschließt:
(a) ein Gehäuse (81);
(b) einen ersten bewegbaren Träger (84) für in dem Gehäuse (81) befestigte Finger;
(c) eine erste Vielzahl von Fingern (85), die je ein Sockelende und ein Anstoßende haben, wobei das Sockelende an den ersten bewegbaren Träger (84) befestigt ist, und das Anstoßende sich von dem Träger fort erstreckt;
(d) einen zweiten bewegbaren Träger (86) für in dem Gehäuse (81) befestigte Finger;
(e) eine zweite Vielzahl von Fingern (87), die je ein Sockelende und ein Anstoßende haben, wobei das Sockelende an dem zweiten bewegbaren Träger (86) befestigt ist, das Anstoßende sich von dem Träger fort erstreckt; und
(f) ein Mittel (88, 88a), um die bewegbaren Träger zu drehen, in dem der erste bewegbare Träger und der zweite bewegbare Träger relativ zueinander angeordnet sind, so daß, während der erste bewegbare Träger die erste Vielzahl von Fingern im Uhrzeigersinn bewegt, und während der zweite bewegbare Träger die zweite Vielzahl von Fingern gegen den Uhrzeigersinn bewegt, die anstoßenden Enden der ersten Vielzahl von Fingern in die anstoßenden Enden der zweiten Vielzahl von Fingern eingreifen, sie aber nicht berühren.

28. Gerät nach Anspruch 27, das weiterhin ein Mittel (89) umfasst, um zu erfassen, daß die Fingergliedbewegung angehalten worden ist, und in dem das Mittel zur Bewegung der bewegbaren Träger ein Mittel einschließt, um die Winkelrichtung von jedem der bewegbaren Träger umzukehren, die betreibbar an das Mittel zur Erfassung, daß Fingergliedbewegung angehalten worden, ist angeschlossen ist, so daß, falls das Mittel zur Erfassung der Anhaltung der Fingergliedbewegung tatsächlich erfasst, daß eine solche Bewegung angehalten worden ist, das Mittel zur Umkehrung der Winkelrichtung wirkt, um zu verursachen, daß die erste Vielzahl von Fingern sich gegen den Uhrzeigersinn dreht, und die zweite Vielzahl von Fingern sich im Uhrzeigersinn dreht.

29. Gerät nach einem der Ansprüche 17 bis 28, das ein Förderbandmittel (180, 200, 204, 221) einschließt, um dem Zeilenabtastkameradetektor (226) gleichzeitig eine Vielzahl von Strömen von sich kontinuierlich bewegenden Gegenständen zu präsentieren, für dessen gleichzeitige Auffindung der Menge von Licht, das durch individuelle Gegenstände in der Vielzahl von Strömen übertragen wird, zu präsentieren.

30. Gerät nach einem der Ansprüche 17 bis 29, das ein Förderband (221) einschließt, um dem Zeilenabtastkameradetektor (226) einen sich kontinuierlich bewegenden, gleitenden Strom von Gegenständen zu präsentieren.

## Revendications

1. Méthode de séparation d'articles individuels de matière plastique d'un mélange d'articles de plastique, qui s'avère particulièrement utile à la récupération des plastiques recyclables à partir de sources de déchets tel que des ordures ménagères, et dont chacun des articles individuels consiste en prédominance d'une seule classe de plastique, mais dont divers articles individuels du mélange sont réalisés en diverses classes de plastique, ladite méthode comportant:
la mesure de l'effet de chaque article individuel d'un faisceau d'articles sur la lumière de nature prédéterminée dirigée vers l'article depuis une source (224) et ladite mesure part un capteur (226) opposé à la source au fur et à mesure que les articles dudit faisceau passent successivement devant la source et le capteur; et
l'élimination sélective d'articles individuels du faisceau suivant comparaison de la lumière produite par la source (224) et toute lumière reçue au capteur (226);
caractérisée en ce que la lumière depuis les articles individuels est détectée par une caméra de balayage de ligne formant un élément du capteur (226) lorsque les articles du faisceau se déplacent en continu devant la source de lumière (224) et devant le capteur (226).

2. Méthode selon la revendication 1 comportant en outre la phase de définition éventuelle si un article individuel est à proximité de la source (224) et du capteur (226), de façon telle qu'un article est retiré en l'éventualité qu'un article s'avère à proximité de la source et du capteur et qu'aucune lumière ne soit détectée par le capteur lors du passage de l'article.

3. Méthode selon la revendication 1 ou 2, suivant laquelle la phase de mesure de l'effet prévoit la phase d'après laquelle la lumière est dirigée depuis la source (224) vers chacun des articles au travers d'un premier polariseur (225), ainsi que la phase d'après laquelle la lumière est dirigée au travers d'un deuxième polariseur (234), et suivant laquelle le deuxième polariseur est orienté en sens perpendiculaire par rapport au premier polariseur, de telle manière qu'en l'absence de rotation de la lumière polarisée par un article, les premier et deuxième polariseurs entravent l'arrivée au capteur de la lumière de la source, mais la rotation de la lumière par un article admet l'arrivée de la lumière de source au capteur.

4. Méthode selon la revendication 3, suivant laquelle la phase de mesure de l'effet comporte en outre l'envoi de la lumière dirigée depuis la source (224) au travers d'un premier écran coloré avant la détection de la lumière à l'article, et l'envoi de la lumière dirigée au travers d'un deuxième écran coloré (237; 244) suite au passage par l'article, de façon telle qu'après sa rotation par les articles incolores la plupart de la lumière rejoint le capteur, mais après sa rotation par certains articles colorés la plupart de la lumière ne rejoint pas le capteur.

5. Méthode selon l'une ou l'autre des revendications précédentes, suivant laquelle la phase de mesure de l'effet comporte la mesure de l'effet d'un article sur la lumière qui définit le mélange en une fraction supérieure et une fraction inférieure, et suivant laquelle la phase d'élimination sélective depuis le faisceau des articles individuels de façon telle que la fraction supérieure continue comme faisceau.

6. Méthode selon l'une ou l'autre des revendications précédentes selon laquelle la phase de mesure de l'effet de chaque article individuel sur une lumière de nature prédéterminée comporte la mesure de l'effet de chaque article individuel comportant une bouteille dans un faisceau de bouteilles plastiques tel qu'exercé sur la lumière d'une nature prédéterminée dirigée sur la bouteille et mesurée à un capteur en opposition à la source comme faisceau de bouteilles plastiques est dirigée pour passer successivement devant la source et le capteur.

7. Méthode selon la revendication 6, suivant laquelle le faisceau de bouteilles plastiques est un mélange de bouteilles plastiques sélectionnées à partir du groupe consistant de bouteilles de téréphtalate de polyéthylène incolore, de bouteilles de téréphtalate de polyéthylène vert, de bouteilles de polyéthylène incolore de haute densité, de bouteilles de polyéthylène coloré de haute densité, de bouteilles de chlorure de polypropylène, de bouteilles de polypropylène, de bouteilles de polycarbonate et de bouteilles de polystyrène.

8. Méthode selon la revendication 6 ou 7, qui comporte en outre la phase de positionnement de bouteilles de plastique en orientation préférée qui maximise l'exposition de chaque bouteille entre la source de lumière et le capteur, une position relative préférée par rapport au capteur qui maximise la précision de détection, et un écart préféré par rapport à d'autres bouteilles dams le faisceau de bouteilles qui minimise le risque de détection simultanée supérieure à une bouteille à la fois avant la phase de mesure de l'effet.

9. Méthode selon l'une ou l'autre des revendications précédentes selon les articles à séparer comportent un mélange de bouteilles de plastiques seules et de grappes de plusieurs bouteilles enchevêtrées, la méthode prévoyant avant la phase de mesure de l'effet, l'envoi d'un jet d'air (103) de force suffisante pour déplacer une seule bouteille vers un moyen de collecte (136) mais de force insuffisante pour déplacer une grappe de bouteilles enchevêtrées vers ledit moyen de collecte.

10. Méthode selon la revendication 9, suivant laquelle lesdites grappes de bouteilles enchevêtrées comportent des petites grappes de bouteilles enchevêtrées et des grosses grappes de bouteilles enchevêtrées, et suivant laquelle ledit mélange comporte en outre des articles de feuille de papier et de plastique, des articles métalliques et des articles de petites dimensions, la méthode comportant en outre les phases suivantes:
élimination des articles de feuille de papier et de plastique;
élimination des articles métalliques;
transport des bouteilles uniques, grappes de bouteilles enchevêtrées, et d'articles de petites dimensions pour les passer sur une pluralité d'ouvertures (115) de grandeur suffisante pour recevoir des bouteilles uniques, des petites grappes de bouteilles enchevêtrées, ou des articles de petites dimensions, mais dont lesdites ouvertures sont trop petites pour y admettre les grosses grappes de bouteilles enchevêtrées.
transport de bouteilles uniques, de petites grappes de bouteilles enchevêtrées, ou d'articles de petites dimensions pour les passer sur une pluralité d'ouvertures (115) de grandeur suffisante pour admettre les articles de petites dimensions mais trop petites pour admettre les bouteilles uniques ou les petites grappes de bouteilles enchevêtrées.

11. Méthode selon la revendication 9 ou 10, qui comporte la phase supplémentaire de démantèlement d'une botte (B) de bouteilles uniques écrasées enchevêtrées et de grappes de bouteilles enchevêtrées pour obtenir des bouteilles uniques et individuel les et des grappes de bouteilles enchevêtrées avant la phase de mesure de l'effet.

12. Méthode selon l'une ou l'autre des revendications 9 à 11, qui comporte le démantèlement des bouteilles d'une grappe de bouteilles enchevêtrées en frappant le bouteilles individuelles d'une grappe de bouteilles enchevêtrées avec des doigts mobiles opposés (85, 87) de manière à créer une force de torsion de séparation, les doigts mobiles opposés comportant deux jeux de doigts qui s'entrelacent sans contact (85,87) montés sur des supports mobiles (84, 86).

13. Méthode selon la revendication 9 ou 10, qui comporte les phases supplémentaires suivantes:
(a) la détection de l'absence de mouvement des doigts, ladite absence de mouvement des doigts indiquant qu'une seule bouteille ou seule grappe de bouteilles enchevêtrées est retenue entre les deux jeux de doigts rotatifs (85, 87) et entrave la rotation des doigts; et
(b) l'inversion du sens angulaire de mouvement des doigts après la phase captrice d'absence de mouvement des doigts.

14. Méthode selon l'une ou l'autre des revendications précédentes de séparation d'articles de plastique comportant le démantèlement de bouteilles plastiques portant leur capsule, la méthode comportant suite à la phase d'élimination sélective, la frappe d'une bouteille plastique munie d'une capsule au moyen d'une lame de frappe (293) alors que la lame de frappe se déplace en rapport proximité mais sans contact avec une lame fixe (294), avec une force suffisante pour séparer la capsule de la bouteille plastique.

15. Méthode selon l'une ou l'autre des revendications précédentes qui comporte:
la formation à partir du mélange d'articles d'une pluralité de faisceaux en déplacement continu;
le passage de lumière au travers des articles en déplacement dans ladite pluralité de faisceaux; et
la détection simultanée avec ladite caméra de balayage de lignes (226), de ladite lumière transmise au travers des articles en déplacement dans ladite pluralité de faisceaux.

16. Méthode selon l'une ou l'autre des revendications précédentes suivant laquelle la phase de mesure de l'effet de chaque article individuel sur la lumière provenant de la source de lumière (224) est effectuée par les articles du faisceau glissant en mouvement continu au fur et à mesure qu'ils passent la source (224) et le capteur de caméra de balayage de lignes (226).

17. Appareil de séparation d'articles individuels de plastique à partir d'un faisceau mélangé d'articles de plastique, qui s'avère particulièrement utile dans le recyclage des articles de plastique à partir de sources de déchets tel que les ordures ménagères, et dont chaque article individuel de plastique consiste en prédominance d'une seule classe de plastique, mais dont les différents articles individuels du mélange comportent diverses classes de plastique, l'appareil comportant:
(a) une source de lumière (224) émettant la lumière d'un caractère prédéterminé;
(b) un capteur (226) opposé ladite source de lumière pour mesurer l'effet de chaque article individuel sur la lumière émise par ladite source de lumière lors du passage successif des articles individuels entre le faisceau de lumière et ledit capteur; et
(c) des moyens de tri (229, 231) répondant audit capteur (226) pour l'élimination sélective d'articles individuels du faisceau selon une comparaison de la lumière produite par ladite source et toute lumière détectée par ledit capteur;
caractérisé par un capteur de caméra de balayage de lignes comportant le capteur (226), le capteur de caméra de balayage de lignes admettant le fonctionnement pour détecter la lumière provenant des articles individuels lorsque les articles du faisceau se déplacent en continu devant la source de lumière (224) et le capteur (226).

18. Appareil selon la revendication 17, suivant lequel un premier polariseur (225) est situé entre ladite source de lumière (224) et le faisceau en mouvement continu d'articles individuels pour filtrer la lumière émise par ladite source de lumière, et suivant lequel un deuxième polariseur (234) est situé entre le faisceau d'articles et ledit capteur (226) pour filtrer la lumière passant par chaque article individuel, et suivant lequel ledit deuxième polariseur (234) est orienté en sens perpendiculaire au premier polariseur (225) de façon telle que pratiquement aucune lumière ne rejoint le capteur sauf rotation par les articles individuels du faisceau de la lumière sortant du premier polariseur, mais de façon telle que la détection de la lumière au capteur indique la présence d'un article.

19. Appareil selon la revendication 18, comportant en outre des moyens capteurs de proximité (243) pour déterminer lorsqu'un article est en position pour passer entre ladite source de lumière (226) et ledit capteur (224); et
dans lequel des moyens de tri (229, 231) répondent également auxdits moyens capteurs de proximité de telle façon que si les moyens capteurs de proximité détectent la présence d'un article et ledit capteur détecte la présence d'un article et ledit capteur ne détecte pratiquement aucune rotation de la lumière par un article, lesdits moyens de tri éliminent l'article du faisceau, et si lesdits moyens capteurs de proximité détectent la présence d'un article et ledit capteur détecte la rotation de lumière, lesdits moyens de tri n'éliminent pas l'article du faisceau.

20. Appareil selon les revendications 17, 18 ou 19 dont lesdits moyens de tri (229, 231) comportent des moyens pour diriger un jet d'air sur l'article à éliminer du faisceau.

21. Appareil selon l'une ou l'autre des revendications 17 à 20, et comportant en outre des moyens (180) de positionnement d'un article selon une orientation préférée qui maximise l'exposition de l'article entre ladite source de lumière (226) et ledit capteur (224), des moyens de positionnement d'un article par rapport audit capteur qui maximise la précision de détection, et des moyens (200) de positionnement d'un article par rapport à d'autres articles dans le faisceau pour minimiser le risque de détection de plus d'un seul article à la fois.

22. Appareil selon la revendication 21, dont les moyens de positionnement (221) d'un article par rapport audit capteur comportent une surface de glissement inclinée à un angle entre 40° et 70° par rapport à l'horizontale et située entre ladite source de lumière (226) et ledit capteur (224) pour commander le chemin d'un article entre ladite source de lumière et ledit capteur.

23. Appareil selon la revendication 21 ou 22, dont les moyens de positionnement (180) d'un article en orientation préférée comporte une goulotte essentiellement semi-cylindrique (183), le diamètre de ladite goulotte semi-cylindrique étant supérieur à la largeur d'un article mais inférieur à la longueur d'un article. de telle façon que l'article soit orienté avec son axe longitudinal essentiellement parallèle par rapport à l'axe longitudinal de ladite goulotte semi-cylindrique.

24. Appareil selon la revendication 23, dont lesdits moyens de positionnement (180) d'un article prévoient de moyens vibratoires (185) pour agiter un article et l'amener en une orientation suivant laquelle son axe longitudinal est essentiellement parallèle avec l'axe longitudinal de ladite goulotte semi-cylindrique (183).

25. Appareil selon l'une ou l'autre des revendications 17 à 24, un ensemble de criblage pour séparer les articles comportant des bouteilles uniques d'un mélange comportant des bouteilles plastiques uniques, de petites grappes de bouteilles enchevêtrées, de grosses grappes de bouteilles enchevêtrées et des articles de faibles dimensions, ledit ensemble de criblage comportant:
(a) un premier moyen de criblage (108) pour séparer lesdites grosses grappes de bouteilles enchevêtrées dudit mélange, ledit premier ensemble criblage comportant une pluralité d'ouvertures (106), chacune desdites ouvertures étant de grandeur suffisante pour une seule bouteille ou une petite grappe de bouteilles enchevêtrées pour y passer au travers mais de grandeur insuffisante pour y laisser passer une grosse grappe de bouteilles enchevêtrées;
(b) un deuxième moyen de criblage (102) pour éliminer les articles sous-cotes, ledit deuxième moyen de criblage (102) comportant une pluralité d'ouvertures (113), chacune desdites ouvertures étant de grandeur suffisante pour un laisser passer un article sous-cotes mais de grandeur insuffisante pour y laisser passer une bouteille unique ou une petite grappe de bouteilles enchevêtrées; et
(c) un moyen à jet d'air (103 pour séparer des bouteilles uniques et de petites grappes de bouteilles enchevêtrées, ledit moyen à jet d'air étant configuré pour diriger un jet d'air sur une bouteille unique ou une petite grappe de bouteilles enchevêtrées avec une force suffisante pour déplacer une bouteille unique vers un moyen de collecte (136), mais avec une force insuffisante pour déplacer une petite grappe de bouteilles enchevêtrées dans le moyen de collecte.

26. Appareil selon l'une ou l'autre des revendications 17 à 25, y compris une décapsuleuse (290) pour enlever les capsules attachées aux articles comportant des bouteilles de plastique, ladite décapsuleuse comportant:
(a) une chambre (291) ayant une paroi intérieure;
(b) une lame fixe (294) attachée à ladite paroi et ayant un bord de contact, ledit bord de contact étant écarté de ladite paroi intérieure;
(c) une lame de frappe (293) ayant un bord de frappe, et
(d) des moyens de rotation (292, 295) de ladite lame de frappe passant ladite lame fixe montée dans la chambre et de configuration telle qu'à la rotation de ladite lame de frappe, ledit bord de frappe se déplace en une position amenant ledit bord de frappe essentiellement parallèle avec ledit bord de contact et à proximité dudit bord de contact, en l'absence toutefois de tout contact.

27. Appareil selon l'une ou l'autre des revendications 17 à 26, y compris un moyen de dégagement (80) pour dégager des articles comportant les bouteilles uniques par rapport aux grappes de bouteilles enchevêtrées, ledit appareil de dégagement comportant:
(a) un logement (81);
(b) un premier support mobile (84) des doigts attachés à l'intérieur dudit logement (81);
(c) une première pluralité de doigts (85) chacun ayant une extrémité de base et une extrémité de frappe, ladite extrémité de base étant attachée au premier support mobile (84) et ladite extrémité de frappe étant écartée dudit support;
(d) un deuxième support mobile (86) pour les doigts attachés audit logement (81);
(e) une deuxième pluralité de doigts (87) chacun ayant une extrémité de base et une extrémité de frappe, ladite extrémité de base étant attachée au deuxième support mobile (86), et ladite extrémité de frappe étant écartée dudit support; et
(f) des moyens de rotation (88,88a) desdits supports mobiles dont ledit premier support mobile et ledit deuxième support mobile sont situés l'un par rapport à l'autre, afin que lorsque le premier support mobile assure la rotation en sens horaire de ladite pluralité de doigts, et lorsque le deuxième support mobile assure la rotation en sens anti-horaire de ladite deuxième pluralité de doigts, lesdites extrémités de frappe de ladite première pluralité de doigts s'entrelacent mais sans contact desdites extrémités de frappe de la deuxième pluralité de doigts.

28. Un appareil selon la revendication 27, comportant également des moyens de détection de l'immobilisation du mouvement de doigt, et dont lesdits moyens de déplacement desdits supports mobiles prévoient des moyens d'inversion du sens angulaire de chacun desdits supports mobiles raccordé fonctionnellement avec lesdits moyens de détection de l'immobilisation du mouvement de doigt, de façon telle que si effectivement les moyens de détection de l'immobilisation captent l'arrêt dudit mouvement, lesdits moyens d'insertion du sens angulaire sont déclenchés pour provoquer la rotation en sens inverse de la dite première pluralité de doigts et la rotation en sens horaire de ladite deuxième pluralité de doigts.

29. Appareil selon l'une ou l'autre des revendications 17 à 28, y compris un moyen transporteur (180, 200, 204, 221) permettant de présenter simultanément une pluralité de faisceaux d'articles en mouvement continu à un capteur de caméra de balayage de lignes pour capter simultanément le montant de lumière transmis au travers d'articles individuels dans ladite pluralité de faisceaux.

30. Appareil selon l'une ou l'autre des revendications 17 à 29, y compris un transporteur (221) permettant de présenter un faisceau d'articles en mouvement continu à un capteur de caméra de balayage de lignes.
